# EUROPEAN PATENT SPECIFICATION

(11) **EP 3 560 805 B1**
(45) Date of publication and mention of the grant of the patent: **11.05.2022**
(21) Application number: 19165791.5
(22) Date of filing: 28.03.2019
(51) Int. Cl.: B62J 6/02, B62J 17/00, B62J 6/026

(54) **STRADDLED VEHICLE**
GRÄTSCHSITZFAHRZEUG
VÉHICULE À ENFOURCHER

(30) Priority: 25.04.2018 JP 2018083884
(43) Date of publication of application: 30.10.2019
(73) Proprietor: YAMAHA HATSUDOKI KABUSHIKI KAISHA, Iwata-shi, Shizuoka 438-8501 (JP)
(72) Inventor: YOSHIKAWA, Kenshin, Iwata-shi, Shizuoka 438-8501 (JP)
(74) Representative: Grünecker Patent- und Rechtsanwälte PartG mbB

(56) References cited:
- EP-A1- 2 390 170
- EP-A1- 2 860 088
- EP-A1- 3 002 184
- DE-A1-102007 013 309

## Description

This invention relates to a straddled vehicle having a headlight.

Prior art document WO 2015/190332 A discloses a straddled vehicle including a lighting module. The lighting module has a light source, a casing, and a lens. The casing stores the light source. The lens is attached to the casing. The straddled vehicle further includes a housing, an outer cover, and a front cowl. The housing stores the lighting module. The housing covers an upper part, a lower part, a right part, and a left part of the lighting module. The outer cover is attached to the housing. The outer cover covers a front part of the lighting module. The front cowl has an opening. The outer cover is disposed in the opening of the front cowl. The front cowl surrounds edges of the outer cover. The front cowl is in contact with the edges of the outer cover.

JP 2013-86723 A discloses a straddled vehicle including a headlight. The headlight has an LED (light emitting diode), a support case, and a lens. The support case stores the LED. The lens is attached to the support case. The straddled vehicle further includes a duct and a front cowl. The duct stores the headlight. The duct extends in a longitudinal direction. The duct has a front end opened forward. The headlight is located more rearward than the front end of the duct. The headlight is located more forward than a rear end of the duct. The duct covers an upper part, a lower part, a right part, and a left part of the headlight. The front cowl has an opening. The front end of the duct is located in the opening of the front cowl. The front cowl surrounds the front end of the duct. The front cowl is connected to the front end of the duct.

For expediency, the lighting module of WO 2015/190332 A will be called "headlight" herein. In recent years, headlights have been reduced in size. The smaller headlight provides the higher degree of freedom for locating the headlight. It has been considered to install a headlight in a space further opened to the exterior of the straddled vehicle.

It has been considered to provide a straddled vehicle which allows a headlight to be installed in a further opened space.

It has been considered the following changes in order to install a headlight in a further opened space. For example, a review has been done on omission of the outer cover, housing, and front cowl from WO 2015/190332 A. For example, a review has been done on installation of the headlight outside the duct in JP 2013-86723 A. For example, a review has been done on omission of the front cowl from JP 2013-86723 A. These changes allow the headlight to be installed in a space further opened to the exterior of the straddled vehicle.

Furthermore, document DE102007013309 shows another known straddled vehicle comprising: a head tube; a steering device supported by the head tube, the steering device is rotatable relative to the head tube, the steering device includes a handlebar disposed on an upper part of the steering device, a front axle is supported by a lower part of the steering device, a front wheel is supported by the front axle, the head tube has a rear end and a lower end, the lower end is located more forward and lower than the rear end; a headlight supported by the steering device, the headlight is located in front of the head tube in the side view of the vehicle and overlaps the head tube in the front view of the vehicle; the steering device including: a right front suspension located more rightward than the head tube; a left front suspension located more leftward than the head tube; and a bracket connecting the right front suspension and the left front suspension; the headlight including: a light source; a housing storing the light source; and a convex lens attached to the housing, the convex lens is exposed to the exterior of the straddled vehicle; wherein the headlight is located more leftward than the right front suspension and more rightward than the left front suspension; the bracket has a right end and a left end, the headlight is located more leftward than the right end of the bracket and more rightward than the left end of the bracket, and the headlight is located above the bracket in a front view of the vehicle; the headlight is located above the front wheel in the front view of the vehicle; the front wheel has a right end and a left end, and the headlight is located more leftward than the right end of the front wheel and more rightward than the left end of the front wheel; the headlight is located lower than the rear end of the head tube, and the headlight is located higher than the lower end of the head tube; the straddled vehicle further comprises a leakproof cover having at least part thereof located below the headlight and above the bracket in the front view of the vehicle; the leakproof cover including a first shielding portion located below the convex lens and configured to block light emitted downward from the headlight.

However, it has been found a new problem arising when the headlight is installed in the further opened space. The new problem is that the light from the headlight leaks to the vicinity of the rider. When the light from the headlight leaks to the vicinity of the rider, the rider may be unable to ride the straddled vehicle comfortably. That is, the new problem may reduce the rider's comfort.

The cause of the new problem is part of the light from the headlight striking on and reflecting from other components of the straddled vehicle.

Specifically, the headlight not only emits light forward of the headlight, but also slightly emits light upward, downward, rightward, and leftward of the headlight. Further, the headlight may emit light from the surface of the lens also in directions approximating tangents of the lens surface. The headlight may therefore emit light also rearward of the headlight. Particularly when the lens is a convex lens, the headlight emits light over a larger range.

Here, the headlight is installed in a further opened space. Consequently, the light of the headlight emitted in the directions other than forward of the headlight easily strikes upon other components of the straddled vehicle. The other components include a steering device, for example. The other components may also be a bracket provided for the steering device, for example. The light of the headlight striking on such other components can reflect therefrom to scatter to the vicinity of the rider. Especially when the other components are formed of glossy metal, the reflected light can be very strong to affect the rider's comfort.

It is the object of the present invention to provide a straddled vehicle which allows the headlight to be installed in a further opened space while reducing leakage of the light of the headlight. According to the present invention said object is solved by a straddled vehicle having the features of independent claim 1. Preferred embodiments are laid down in the dependent claims.

Accordingly, it is provided a straddled vehicle that comprises: a head tube; a steering device supported by the head tube, the steering device is rotatable relative to the head tube, the steering device includes a handlebar disposed on an upper part of the steering device, a front axle is supported by a lower part of the steering device, a front wheel is supported by the front axle, the head tube has a rear end and a lower end, the lower end is located more forward and lower than the rear end; a headlight supported by the steering device, the headlight is located in front of the head tube in the side view of the vehicle and overlaps the head tube in the front view of the vehicle; the steering device including: a right front suspension located more rightward than the head tube; a left front suspension located more leftward than the head tube; and a bracket connecting the right front suspension and the left front suspension; the headlight including: a light source; a housing storing the light source; and a convex lens attached to the housing, the convex lens is exposed to the exterior of the straddled vehicle, wherein the headlight does not have a member that covers an area in front of the convex lens and the straddled vehicle does not also have a member that covers the area in front of the convex lens; wherein the headlight is located more leftward than the right front suspension and more rightward than the left front suspension; the bracket has a right end and a left end, the headlight is located more leftward than the right end of the bracket and more rightward than the left end of the bracket, and the headlight is located above the bracket in a front view of the vehicle; the headlight is located above the front wheel in the front view of the vehicle; the front wheel has a right end and a left end, and the headlight is located more leftward than the right end of the front wheel and more rightward than the left end of the front wheel; the headlight is located lower than the rear end of the head tube, and the headlight is located higher than the lower end of the head tube; the straddled vehicle further comprises a leakproof cover having at least part thereof located below the headlight and above the bracket in the front view of the vehicle; the leakproof cover including a first shielding portion located below the convex lens and configured to block light emitted downward from the headlight.

The headlight is located above the bracket in the front view of the vehicle. The leakproof cover includes the first shielding portion. The first shielding portion is located below the convex lens. The first shielding portion can therefore block light emitted downward from the headlight. This can inhibit the light from the headlight from striking upon the bracket. As a result, the quantity of light from the headlight which reflects upon the bracket to scatter to the vicinity of the rider can be reduced. Thus, even if the headlight is installed in a further opened space, leakage of the light of the headlight can be reduced conveniently. That is, according to this straddled vehicle, the headlight can be installed in a further opened space, while reducing leakage of the light of the headlight.

In the above straddled vehicle, it is preferred that at least part of the first shielding portion is located higher than the bracket; and the first shielding portion overlaps at least part of the convex lens in a plan view of the vehicle. Since the first shielding portion is located in this way, the first shielding portion can block the light from the headlight before the light reaches the bracket. This can conveniently reduce the light of the headlight scattering to the vicinity of the rider.

In the above straddled vehicle, it is preferred that the leakproof cover is shaped not to cover an upper part of the headlight. This allows the headlight to be installed in a further opened space.

In the above straddled vehicle, it is preferred that the leakproof cover is located in a position spaced from the headlight. This allows the headlight to be installed in a further opened space.

In the above straddled vehicle, it is preferred that the leakproof cover as a whole is located higher than the bracket. According to this, the leakproof cover can efficiently reduce the quantity of light from the headlight striking upon the bracket.

In the above straddled vehicle, it is preferred that the bracket has an upper surface sloping rearward and downward. The upper surface of the bracket sloping rearward and downward can easily reflect the light from the headlight toward the vicinity of the rider. However, the leakproof cover can reduce the quantity of light from the headlight striking upon the bracket. Thus, with the upper surface of the bracket sloping rearward and downward, the leakproof cover exhibits all the higher utility.

It is preferred that the above straddled vehicle further comprises a top cover located above the headlight. The top cover located above the headlight can block the light emitted upward from the headlight. The quantity of light from the headlight scattering to the vicinity of the rider can therefore be further reduced.

In the above straddled vehicle, it is preferred that the top cover is located in a position spaced from the headlight. Consequently, the headlight can be installed in a further opened space.

It is preferred that the above straddled vehicle further comprises a clearance space formed below the top cover and above the headlight, wherein the clearance space is open forward, rightward and leftward. Since the straddled vehicle provides the clearance space, the headlight can be installed in a further opened space. Further, since the clearance space is open forward, rightward, and leftward, the headlight can be installed in a still further opened space.

In the above straddled vehicle, it is preferred that the top cover does not overlap the right front suspension, the left front suspension, or the bracket in a side view of the vehicle. According to this, the size of the top cover is relatively small. The headlight can therefore be installed in a further opened space.

It is preferred that the above straddled vehicle further comprises position lights supported by the top cover; wherein the position lights are located in positions spaced from the headlight. Since the position lights are supported by the top cover, the position lights can be installed conveniently. Since the position lights are located in positions spaced from the headlight, the headlight can be located in a further opened space.

In the above straddled vehicle, it is preferred that the position lights include a right position light, and a left position light located leftward of the right position light; the right position light and the left position light being located higher than the convex lens; the right position light being located more rightward than the convex lens; the left position light being located more leftward than the convex lens. Since the position lights include the right position light and left position light, visibility of the position lights can be improved. Since the right position light is located higher and more rightward than the headlight, the right position light can conveniently be located in a position spaced from the headlight. Since the left position light is located higher and more leftward than the headlight, the left position light can conveniently be located in a position spaced from the headlight.

In the above straddled vehicle, it is preferred that the right position light has an elongated shape extending substantially horizontally in the front view of the vehicle; and the left position light has an elongated shape extending substantially horizontally in the front view of the vehicle. This can improve visibility of the right position light and left position light.

It is preferred that the above straddled vehicle further comprises a meter unit having at least part thereof located above the top cover in the front view of the vehicle. With this arrangement, the top cover can further reduce the quantity of light from the headlight scattering to the vicinity of the meter unit.

It is preferred that the above straddled vehicle further comprises electric wiring having at least part thereof located more forward than a rear end of the head tube, more rearward than the headlight, and higher than the headlight. Consequently, the electric wiring can effectively reduce the quantity of light from the headlight scattering to the vicinity of the rider.

For the purpose of illustrating the present teaching, there are shown in the drawings several forms which are presently preferred, it being understood, however, that the present teaching is not limited to the precise arrangement and instrumentalities shown.
Fig. 1 is a left side view of a straddled vehicle according to an embodiment;
Fig. 2 is a front view of the straddled vehicle;
Fig. 3 is a left side view of a portion of the straddled vehicle;
Fig. 4 is a perspective view of a headlight;
Fig. 5 is a sectional view of the headlight cut through a plane perpendicular to a transverse direction;
Fig. 6 is a front view of a portion of the straddled vehicle;
Fig. 7 is a plan view of the headlight and a leakproof cover;
Fig. 8 is a bottom view of the headlight, the leakproof cover, and a top cover;
Fig. 9 is a plan view of the top cover and headlight;
Fig. 10 is a left side view of a portion of the straddled vehicle;
Fig. 11 is a perspective view of a portion of the straddled vehicle seen from an upper forward position of the straddled vehicle;
Fig. 12 is a left side view of a portion of the straddled vehicle;
Fig. 13 is a perspective view of the portion of the straddled vehicle seen from a rear left position of the straddled vehicle; and
Fig. 14 is a perspective view of a portion of the straddled vehicle seen from a rear left position of the straddled vehicle.

A straddled vehicle 1 according to the present teaching will be described hereinafter with reference to the drawings.

### 1. Outline construction of the straddled vehicle

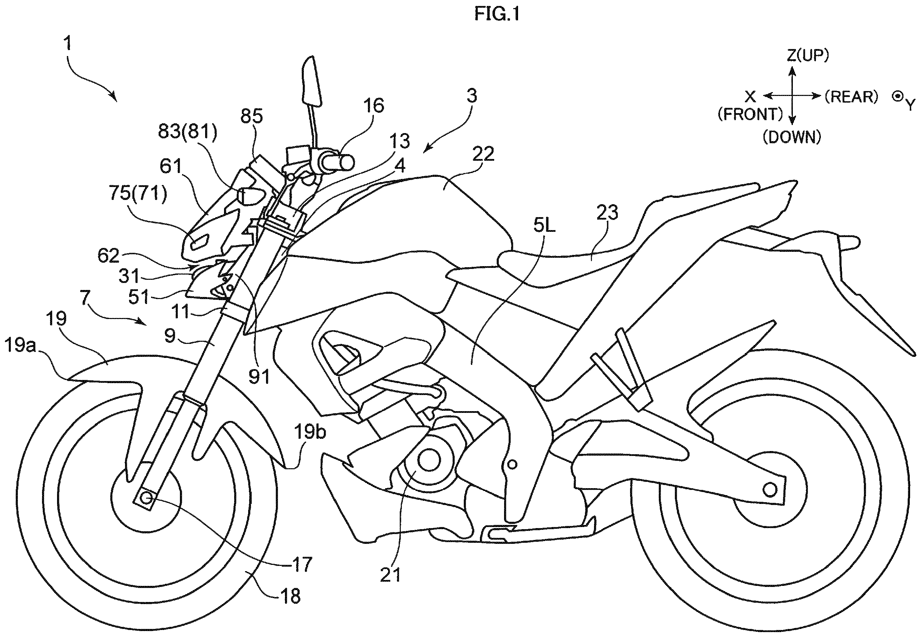

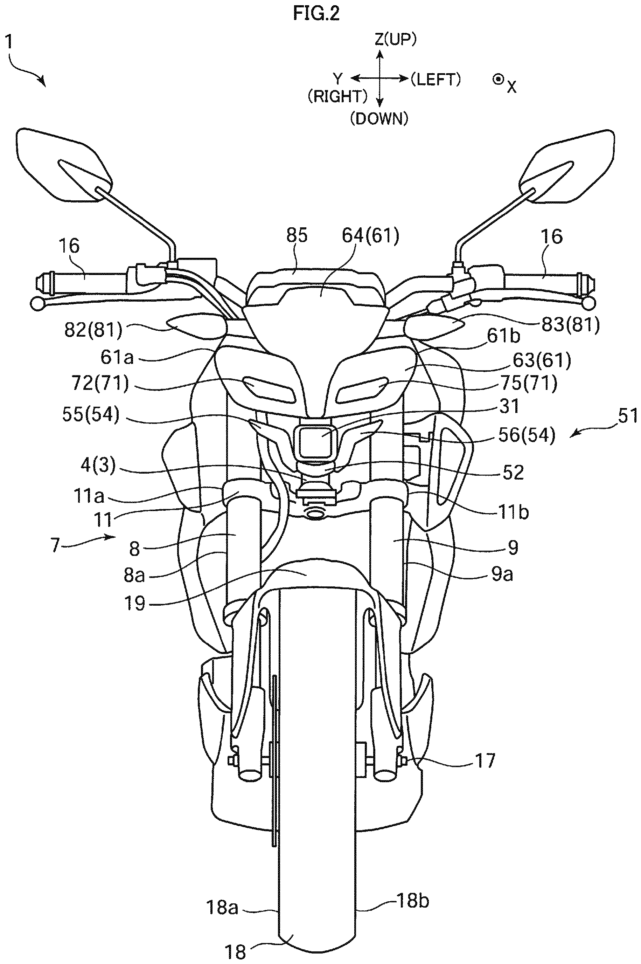

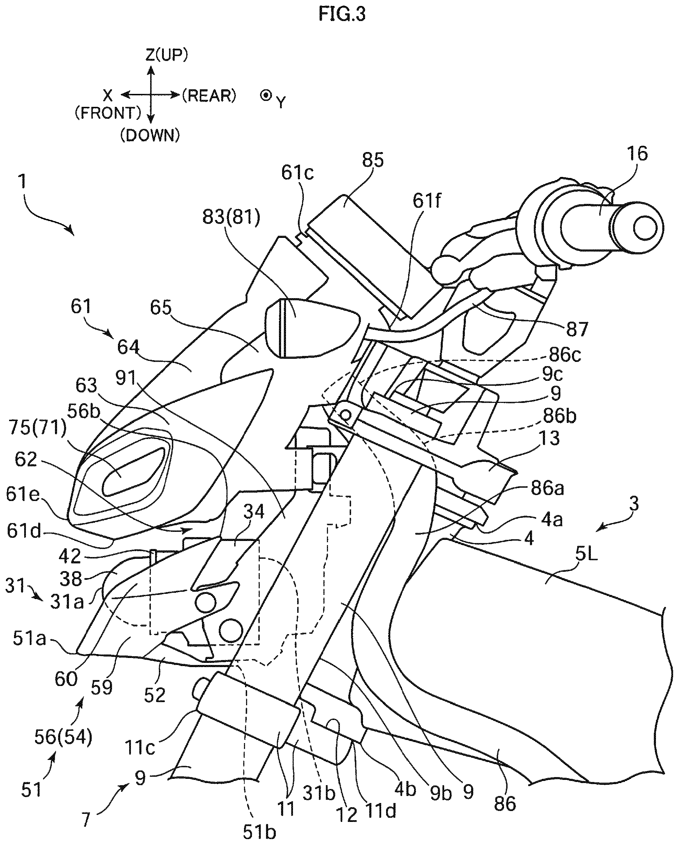

Fig. 1 is a left side view of a straddled vehicle according to an embodiment. Fig. 2 is a front view of the straddled vehicle. Fig. 3 is a left side view of a portion of the straddled vehicle.

Figs. 1 to 3 show a longitudinal direction X, a transverse direction Y, and an up-down direction Z of the straddled vehicle 1. The longitudinal direction X, transverse direction Y, and up-down direction Z are defined with reference to a rider mounted on the straddled vehicle 1. The longitudinal direction X, transverse direction Y, and up-down direction Z are perpendicular to one another.

The terms "forward", "rearward", "upward", "downward", rightward", and "leftward", respectively, mean "forward", "rearward", "upward", "downward", rightward", and "leftward" as seen from the rider mounted on the straddled vehicle 1. In this specification, unless otherwise specified, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. The drawings show, by way of reference, forward, rearward, upward, downward, rightward, and leftward as appropriate.

It is to be understood that, in this specification, various expressions describing arrangements have the following meanings, respectively. The following description will be made taking the transverse direction Y for example, and the same applies to the longitudinal direction X and the up-down direction Z. The expression "member A is located more rightward / leftward than member B" only provides a position of member A relative to member B in the transverse direction Y, and member A may, or may not, overlap member B in a side view of the vehicle.

The expression "member A is located rightward / leftward of member B" without reference to a looking direction provides not only a position of member A relative to member B in the transverse direction Y, but also a position of member A relative to member B in the longitudinal direction X, and a position of member A relative to member B in the up-down direction Z. In this positional relationship, member A overlaps at least part of member B in a side view of the vehicle.

The expression "member A is located rightward / leftward of member B in a plan view of the vehicle" provides a position of member A relative to member B not only in the transverse direction Y, but also in the longitudinal direction X. The front end of member A is located more forward than the rear end of member B, and the rear end of member A is located more rearward than the front end of member B. However, this expression does not provide a position of member A relative to member B in the up-down direction Z.

The expression "member A is located rightward / leftward of member B in a front view of the vehicle" provides a position of member A relative to member B not only in the transverse direction Y, but also in the up-down direction Z. The upper end of member A is located higher than the lower end of member B, and the lower end of member A is located lower than the upper end of member B. However, this expression does not provide a position of member A relative to member B in the longitudinal direction X.

The expression "member A is located forward / rearward of member B in a plan view of the vehicle" or "member A is located above / below member B in a front view of the vehicle" indicates that the right end of member A is located more rightward than the left end of member B, and that the left end of member A is located more leftward than the right end of member B.

The straddled vehicle 1 is a street type vehicle, for example. The rider is mounted on the straddled vehicle 1 and controls the straddled vehicle 1. The straddled vehicle 1 can make turns as the straddled vehicle 1 leans right or left.

The straddled vehicle 1 has a body frame 3. The body frame 3 includes a head tube 4. The head tube 4 is located at the front of the straddled vehicle 1. The head tube 4 extends forward and downward in a side view of the vehicle.

Reference is made to Figs. 1 and 3. The body frame 3 includes a left main frame 5L. The left main frame 5L is connected to the head tube 4. The left main frame 5L extends rearward from the head tube 4. More particularly, the left main frame 5L extends rearward and downward from the head tube 4 in the side view of the vehicle.

The body frame 3 further includes a right main frame (not shown). The right main frame is located rightward of the left main frame 5L. The right main frame overlaps the left main frame 5L in the side view of the vehicle. The right main frame is connected to the head tube 4. The right main frame extends rearward from the head tube 4.

Reference is made to Figs. 1 and 2. The straddled vehicle 1 has a steering device 7, a front axle 17, and a front wheel 18. The steering device 7 is supported by the head tube 4. The steering device 7 is rotatable relative to the head tube 4. The steering device 7 includes a handlebar 16 disposed on an upper part of the steering device 7. The handlebar 16 is operated by the driver (rider) of the straddled vehicle 1. The front axle 17 is supported by a lower part of the steering device 7. The front wheel 18 is supported by the front axle 17.

Reference is made to Fig. 2. The steering device 7 has a right front suspension 8 and a left front suspension 9. The right front suspension 8 is located rightward of the left front suspension 9. The right front suspension 8 is located more rightward than the head tube 4. The left front suspension 9 is located more leftward than the head tube 4. The right front suspension 8 is located rightward of the front wheel 18. The left front suspension 9 is located leftward of the front wheel 18. Both the right front suspension 8 and left front suspension 9 support the front axle 17.

Reference is made to Figs. 1 and 3. The left front suspension 9 overlaps the head tube 4 in the side view of the vehicle. The left front suspension 9 extends downward and forward in the side view of the vehicle. The right front suspension 8 has the same construction and shape as the left front suspension 9 except for being symmetric. The right front suspension 8 overlaps the left front suspension 9 in the side view of the vehicle. The right front suspension 8 overlaps the head tube 4 in the side view of the vehicle. The right front suspension 8 extends downward and forward in the side view of the vehicle.

Reference is made to Figs. 1 to 3. The steering device 7 has an under bracket 11. The under bracket 11 connects the right front suspension 8 and left front suspension 9. The under bracket 11 is located below the head tube 4. The under bracket 11 is located above the front wheel 18.

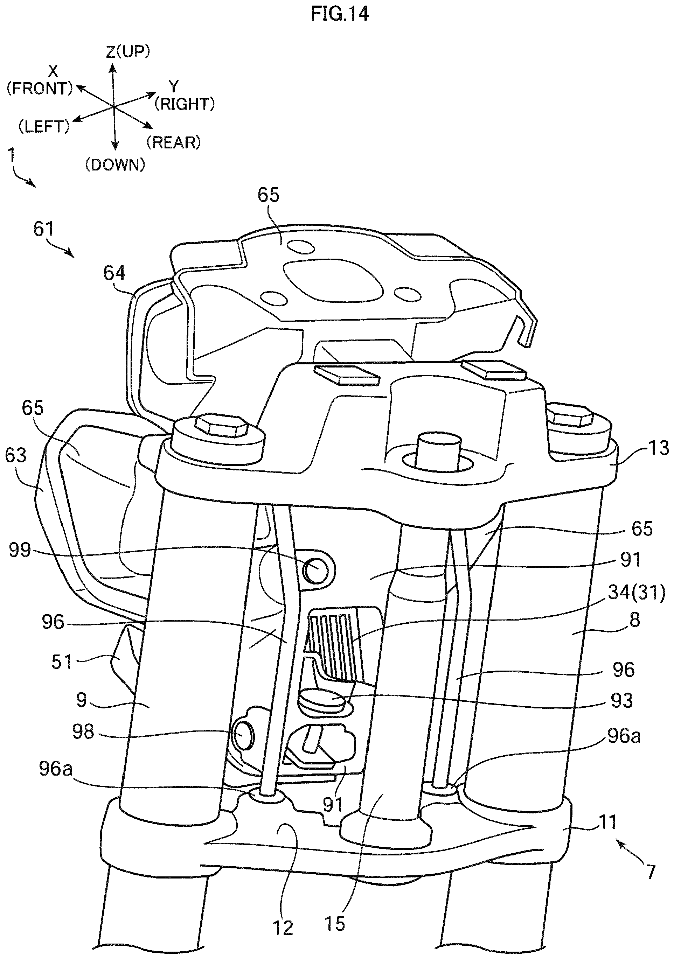

Reference is made to Fig. 3. The under bracket 11 has an upper surface 12. The upper surface 12 is clearly seen in Fig. 14 also. The upper surface 12 extends in the transverse direction Y between the right front suspension 8 and left front suspension 9. The upper surface 12 slopes rearward and downward. The upper surface 12 is substantially orthogonal to the extending direction of the left front suspension 9.

The under bracket 11 is an example of the bracket according to the present teaching.

The steering device 7 has an upper bracket 13. The upper bracket 13 is located higher than the under bracket 11. The upper bracket 13 is located above the head tube 4. The upper bracket 13 connects the right front suspension 8 and left front suspension 9.

The steering device 7 has a steering shaft 15. The steering shaft 15 is shown in Fig. 14. The steering shaft 15 is mounted in the head tube 4. The steering shaft 15 connects the under bracket 11 and upper bracket 13.

Reference is made to Fig. 1. A portion of the right front suspension 8 located higher than the under bracket 11 will be called "upper right portion". A portion of the left front suspension 9 located higher than the under bracket 11 will be called "upper left portion". At least part of the upper right portion is visible in the side view of the vehicle. That is, at least part of the upper right portion is exposed in the side view of the vehicle. Similarly, at least part of the upper left portion is visible in the side view of the vehicle. At least part of the under bracket 11 is visible in the side view of the vehicle.

Reference is made to Fig. 2. At least part of the upper right portion is visible in the front view of the vehicle. At least part of the upper left portion is visible in the front view of the vehicle. At least part of the under bracket 11 is visible in the front view of the vehicle.

Reference is made to Figs. 1 and 2. The straddled vehicle 1 has a front fender 19. The front fender 19 is located above the front wheel 18. The front fender 19 covers an upper part of the front wheel 18. The front fender 19 is located below the head tube 4. The front fender 19 is located below the under bracket 11. The front fender 19 is supported by the steering device 7. The front fender 19 is supported by the right front suspension 8 and left front suspension 9.

Reference is made to Fig. 1. The front fender 19 has a front end 19a and a rear end 19b. The front fender 19 extends in the longitudinal direction X between the front end 19a and rear end 19b. The front end 19a is located in front of the left front suspension 9 in the side view of the vehicle. The rear end 19b is located behind the left front suspension 9 in the side view of the vehicle. In other words, the front fender 19 includes a portion located in front of the left front suspension 9 and a portion located behind the left front suspension 9 in the side view of the vehicle.

Reference is made to Fig. 1. The straddled vehicle 1 has an engine 21. The engine 21 generates power for running the straddled vehicle 1.

The straddled vehicle 1 has a tank cover 22 and a fuel tank (not shown). The tank cover 22 is located above the engine 21 in the side view of the vehicle. At least part of the tank cover 22 is located above the left main frame 5L in the side view of the vehicle. The tank cover 22 is located in a position overlapping the fuel tank in the side view of the vehicle. The tank cover 22 covers sides of the fuel tank. The fuel tank is located above the engine 21 in the side view of the vehicle. The fuel tank is located above the left main frame 5L in the side view of the vehicle. The fuel tank is supported by the left main frame 5L and right main frame. Fig. 3 omits illustration of the tank cover 22 and the fuel tank.

The straddled vehicle 1 has a seat 23. The seat 23 is located behind the fuel tank. At least part of the seat 23 is located in the same height position as the fuel tank.

The driver (rider) of the straddled vehicle 1 sits straddling the seat 23, puts on a knee grip, and grasps the handlebar 16. The knee grip is a holding of part of the straddled vehicle 1 between the driver's (rider's) legs. The part of the straddled vehicle 1 is at least part of the right main frame, left main frame 5L, tank cover 22, and fuel tank, for example.

Reference is made to Figs. 1 to 3. The straddled vehicle 1 has one headlight 31. The headlight 31 emits light ahead of the straddled vehicle 1. The straddled vehicle 1 has a leakproof cover 51 and a top cover 61. The leakproof cover 51 reduces leakage of the light of the headlight 31. The top cover 61 also reduces leakage of the light of the headlight 31. The headlight 31, leakproof cover 51, top cover 61, and constructions relating to these will be described hereinafter.

### 2. Headlight

Reference is made to Figs. 1 and 3. At least part of the headlight 31 is visible in the side view of the vehicle. More particularly, the same headlight 31 is visible in the right side view and the left side view. The size of the headlight 31 is relatively small.

Reference is made to Fig. 2. The headlight 31 overlaps the head tube 4 in the front view of the vehicle. The headlight 31 is located more leftward than the right front suspension 8. The headlight 31 is located more rightward than the left front suspension 9. The headlight 31 is located above the under bracket 11 in the front view of the vehicle. The under bracket 11 has a right end 11a and a left end 11b. The headlight 31 is located more leftward than the right end 11a and more rightward than the left end 11b.

The headlight 31 is located above the front fender 19 in the front view of the vehicle. The headlight 31 is located above the front wheel 18 in the front view of the vehicle. The front wheel 18 has a right end 18a and a left end 18b. The headlight 31 is located more leftward than the right end 18a and more rightward than the left end 18b.

Reference is made to Fig. 3. The headlight 31 is located in front of the head tube 4 in the side view of the vehicle. The head tube 4 has a rear end 4a and a lower end 4b. The lower end 4b is located more forward and lower than the rear end 4a. The headlight 31 is located lower than the rear end 4a. The headlight 31 is located higher than the lower end 4b.

The headlight 31 has a portion overlapping the left front suspension 9 and a portion located in front of the left front suspension 9 in the side view of the vehicle. The left front suspension 9 has a rear edge 9b in the side view of the vehicle. The rear edge 9b extends downward and forward in the side view of the vehicle. The headlight 31 is located in front of the rear edge 9b in the side view of the vehicle. The left front suspension 9 has an upper end 9c. The headlight 31 is located lower than the upper end 9c.

The headlight 31 is located above the under bracket 11 in the side view of the vehicle. The headlight 31 includes a portion located more forward than the under bracket 11. The under bracket 11 has a front end 11c and a rear end 11d. The under bracket 11 extends in the longitudinal direction X between the front end 11c and rear end 11d. The headlight 31 has a front end 31a and a rear end 31b. The headlight 31 extends in the longitudinal direction X between the front end 31a and rear end 31b. The front end 31a of the headlight 31 is located more forward than the under bracket 11. The rear end 31b of the headlight 31 is located more rearward than the front end 11c of the under bracket 11 and more forward than the rear end 11d of the under bracket 11.

The headlight 31 is located lower and more forward than the upper bracket 13.

Reference is made to Fig. 1. The headlight 31 is located more rearward than the front end 19a of the front fender 19.

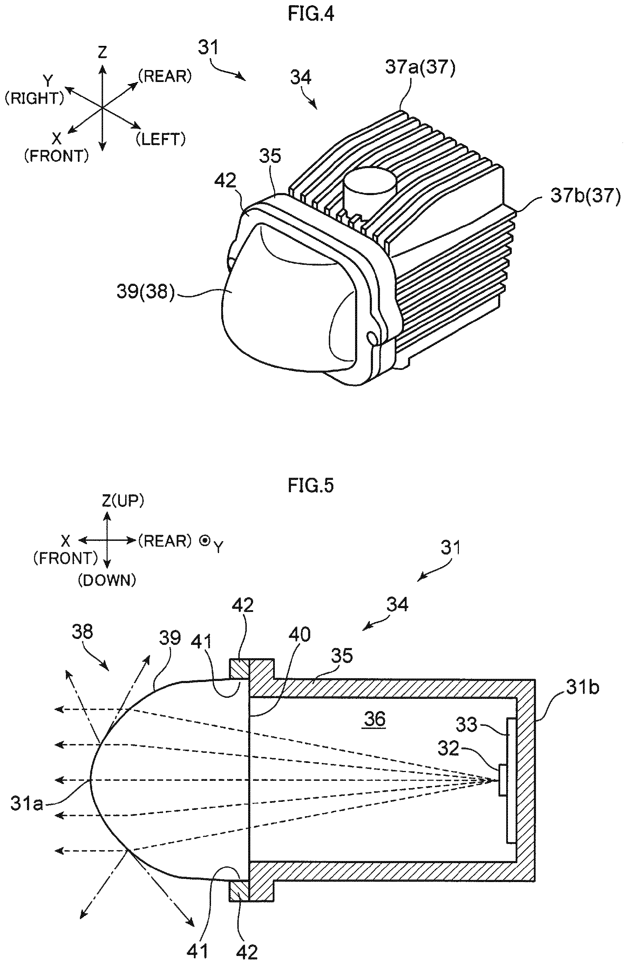

Fig. 4 is a perspective view of the headlight 31. Fig. 5 is a sectional view of the headlight 31 cut through a plane perpendicular to the transverse direction Y.

The headlight 31 is the projector type as described in detail hereinafter. The headlight 31 can therefore easily be reduced in size while securing the quantity of light of the headlight 31.

The headlight 31 has a light source 32, a housing 34, and a convex lens 38. The light source 32 emits light. The housing 34 stores the light source 32. The convex lens 38 is attached to the housing 34. Fig. 5 omits hatches showing a section of the convex lens 38.

The light source 32 is a semiconductor light source, for example. The semiconductor light source is at least one of a light emitting diode (LED), an organic electroluminescence element, and a laser diode, for example. The light emitted from the light source 32 desirably has high directivity. The light emitted from the light source 32 desirably has high straight traveling performance.

The number of light sources 32 stored in the housing 34 may be one or more. In this embodiment, the light source 32 is limited to the light source of the headlight 31. The housing 34 does not store any light sources other than the light source 32 of the headlight 31. For example, the housing 34 does not store light sources for position lights.

The light source 32 of the headlight 31 will be described. The light source 32 of the headlight 31 mainly emits light for securing visibility for the rider. For example, even when it is dark around the straddled vehicle 1 (e.g. at night), the rider can easily see the traveling surface ahead of the straddled vehicle 1 by the light from the light source 32 of the headlight 31. The light source 32 of the headlight 31 may be a light source for high beams, or may be a light source for low beams, for example. Incidentally, the light sources for the position lights mainly emit light for securing conspicuity of the straddled vehicle 1. For example, even when it is dark around the straddled vehicle 1, a third party other than the riders (including the driver) on the straddled vehicle 1 can easily recognize the size (e.g. the vehicle width) of the straddled vehicle 1 by the light of the light sources for the position lights.

The headlight 31 has a base plate 33. The light source 32 is installed on a front face of the base plate 33. The base plate 33 is also stored in the housing 34.

The housing 34 has a box portion 35 and an interior space 36. The box portion 35 has a substantially rectangular shape in the plan view and side view of the vehicle. The box portion 35 has a light blocking property. That is, the box portion 35 does not transmit light. The interior space 36 is formed inside the box portion 35. The box portion 35 has an opening formed in a front face thereof. The light source 32 and base plate 33 are arranged in the interior space 36. The box portion 35 covers an upper part, a lower part, a right part, a left part, and a rear part of the light source 32.

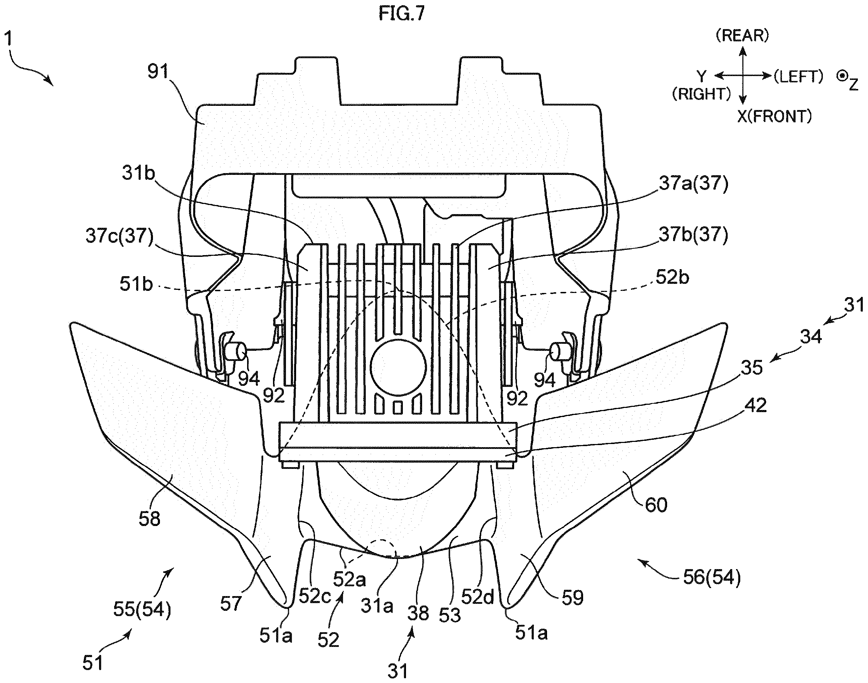

The housing 34 has a heat radiator 37. The heat radiator 37 is connected to the box portion 35. The heat radiator 37 includes upper radiator fins 37a and left heat radiator fins 37b. The upper radiator fins 37a are connected to an upper surface of the box portion 35. The upper radiator fins 37a project upward from the box portion 35. The left radiator fins 37b are connected to a left side of the box portion 35. The left radiator fins 37b project leftward from the box portion 35. The heat radiator 37 further includes right radiator fins 37c. The right radiator fins 37c are shown in Fig. 7.

The convex lens 38 transmits light. The convex lens 38 refracts light. The convex lens 38 has a substantially hemispherical shape in the side view and plan view of the vehicle. The convex lens 38 has a front face 39 and a rear face 40. The front face 39 is curved to bulge forward. The front face 39 is curved to have a substantially hemispherical shape in the side view and plan view of the vehicle. The front face 39 includes the front end 31a of the headlight 31. That is, a front end of the front face 39 corresponds to the front end 31a of the headlight 31. The rear face 40 is located behind the front face 39. The rear face 40 is substantially flat. The rear face 40 is substantially perpendicular to the longitudinal direction X.

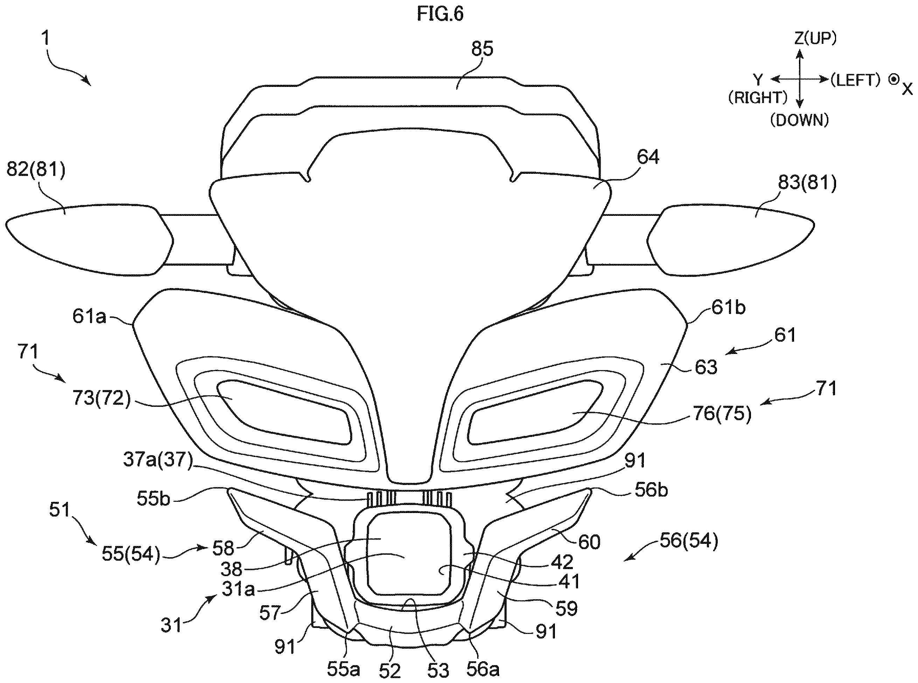

Fig. 6 is a front view of a portion of the straddled vehicle 1. The convex lens 38 has a substantially rectangular shape in the front view of the vehicle. The convex lens 38 has a substantially square shape in the front view of the vehicle. The front end 31a is located substantially at the center of the convex lens 38 in the front view of the vehicle.

The convex lens 38 has an edge portion 41. The edge portion 41 is located around the front end 31a in the front view of the vehicle. The edge portion 41 has a substantially rectangular shape in the front view of the vehicle.

The headlight 31 has a flange 42. The flange 42 is located around the convex lens 38 in the front view of the vehicle. The flange 42 is connected to the convex lens 38. The flange 42 is connected to the edge portion 41. The flange 42 extends upward, downward, rightward, and leftward from the edge portion 41 in the front view of the vehicle. The flange 42 has a substantially rectangular shape in the front view of the vehicle.

Reference is made to Fig. 5. The edge portion 41 is located more rearward than the front end 31a. The flange 42 is located more rearward than the front end 31a. The flange 42 extends upward and downward from the edge portion 41 in the side view of the vehicle.

The convex lens 38 is attached to a front face of the housing 34. More particularly, the flange 42 is in contact with the front face of the box portion 35. The flange 42 is joined to the box portion 35. Thus, the convex lens 38 is connected to the box portion 35 through the flange 42.

The convex lens 38 is located in front of the light source 32. The convex lens 38 closes the interior space 36. The interior space 36 is demarcated only by the box portion 35 and convex lens 38.

The convex lens 38 (specifically the front face 39) is exposed to the exterior of the straddled vehicle 1. Specifically, the headlight 31 does not have a member (e.g. a clear cover) that covers an area in front of the convex lens 38. The straddled vehicle 1 does not also have a member (e.g. a clear cover) that covers the area in front of the convex lens 38.

Fig. 5 schematically shows, in broken lines, light traveling forward of the headlight 31 from the light source 32. The light is emitted from the light source 32. The light passes through the convex lens 38. Specifically, the light travels from the rear face 40 of the convex lens 38 to the front face 39 of the convex lens 38. When the light passes through the convex lens 38, the light is refracted. The light is emitted from the front face 39. The light travels forward from the front face 39. The light traveling forward from the front face 39 is parallel light, for example.

However, all the light emitted from the light source 32 does not necessarily travel forward of the headlight 31. Part of the light emitted from the front face 39 may travel in other directions than forward of the headlight 31. Fig. 5 shows, in alternate long and short dash lines, light traveling from the front face 39 in directions other than forward of the headlight 31. For example, a fraction of the light may travel from the front face 39 in at least one of upward, downward, rightward and leftward directions of the headlight 31. Further, part of the light emitted from the front face 39 may travel in directions approximate to tangents to the front face 39. For example, therefore, a fraction of light may travel from the front face 39 rearward of the headlight 31.

Reference is made to Fig. 3. The convex lens 38 is located more forward than the left front suspension 9. The convex lens 38 is located more forward than the under bracket 11. Part of the convex lens 38 is visible in the side view of the vehicle. Specifically, an upper part of the convex lens 38 is visible in the side view of the vehicle. The front end 31a of the headlight 31 is visible in the side view of the vehicle. Part of the housing 34 is visible in the side view of the vehicle. Part of the flange 42 is visible in the side view of the vehicle.

Reference is made to Fig. 6. The convex lens 38 is visible in the front view of the vehicle. The flange 42 is visible in the front view of the vehicle. The upper radiator fins 37a are visible in the front view of the vehicle.

### 3. Leakproof cover

Reference is made to Fig. 2. The leakproof cover 51 has at least a light reducing property. In this embodiment, the leakproof cover 51 has a light blocking property. That is, the leakproof cover 51 does not transmit light. The leakproof cover 51 is formed of a non-transparent material. The leakproof cover 51 is formed of a colored synthetic resin, for example.

The leakproof cover 51 overlaps the head tube 4 in the front view of the vehicle. The leakproof cover 51 overlaps the right front suspension 8 and left front suspension 9 in the front view of the vehicle. The leakproof cover 51 is located leftward of a right edge 8a of the right front suspension 8 in the front view of the vehicle. The leakproof cover 51 is located rightward of a left edge 9a of the left front suspension 9 in the front view of the vehicle. The leakproof cover 51 is located above the under bracket 11 in the front view of the vehicle. The leakproof cover 51 is located more leftward than the right end 11a of the under bracket 11 and more rightward than the left end 11b of the under bracket 11.

Reference is made to Fig. 3. The leakproof cover 51 is located in front of the head tube 4 in the side view of the vehicle. The leakproof cover 51 is located lower than the rear end 4a of the head tube 4, and higher than the lower end 4b of the head tube 4.

The leakproof cover 51 includes a portion located in front of the left front suspension 9 and a portion overlapping the left front suspension 9 in the side view of the vehicle. The leakproof cover 51 does not include a portion located behind the left front suspension 9 in the side view of the vehicle. The leakproof cover 51 is located in front of the rear edge 9b of the left front suspension 9 in the side view of the vehicle. The leakproof cover 51 is located lower than the upper end 9c of the left front suspension 9.

The leakproof cover 51 is located above the under bracket 11 in the side view of the vehicle. The leakproof cover 51 includes a portion located more forward than the under bracket 11. The leakproof cover 51 has front ends 51a and a rear end 51b. The leakproof cover 51 extends in the longitudinal direction X between the front ends 51a and rear end 51b. The front ends 51a of the leakproof cover 51 are located more forward than the under bracket 11. The rear end 51b of the leakproof cover 51 is located more rearward than the front end 11c of the under bracket 11, and more forward than the rear end 11d of the under bracket 11. The leakproof cover 51 is located more forward and lower than the upper bracket 13.

Thus, the leakproof cover 51 does not overlap the head tube 4, under bracket 11, or upper bracket 13 in the side view of the vehicle.

Reference is made to Fig. 1. The leakproof cover 51 is located more rearward than the front end 19a of the front fender 19.

Reference is made to Fig. 3. The leakproof cover 51 overlaps part of the headlight 31 in the side view of the vehicle. The leakproof cover 51 overlaps part of the convex lens 38 in the side view of the vehicle. The leakproof cover 51 overlaps part of the housing 34 in the side view of the vehicle. The front ends 51a of the leakproof cover 51 are located more forward than the front end 31a of the headlight 31. The front ends 51a and rear end 51b of the leakproof cover 51 are located lower than the front end 31a of the headlight 31, respectively. The rear end 51b of the leakproof cover 51 is located more rearward than the convex lens 38. The rear end 51b of the leakproof cover 51 is located more forward than the rear end 31b of the headlight 31.

Reference is made to Fig. 6. At least part of the leakproof cover 51 is located below the headlight 31 in the front view of the vehicle. Specifically, the leakproof cover 51 includes a portion located below the headlight 31, a portion located rightward of the headlight 31, and a portion located leftward of the headlight 31 in the front view of the vehicle. The leakproof cover 51 does not include a portion located above the headlight 31 in the front view of the vehicle. The leakproof cover 51 is substantially U-shaped in the front view of the vehicle. The leakproof cover 51 has a shape covering a lower part, a right part, and a left part of the headlight 31 in the front view of the vehicle. The leakproof cover 51 is shaped not to cover an upper part of the headlight 31. More particularly, the leakproof cover 51 is shaped not to cover an upper part, a front part, or a rear part of the headlight 31.

The leakproof cover 51 is located in a position spaced from the headlight 31. That is, the leakproof cover 51 is located in a position out of contact with the headlight 31.

The leakproof cover 51 does not overlap the convex lens 38 in the front view of the vehicle. The leakproof cover 51 does not surround the convex lens 38 to close the circumference of the latter. The leakproof cover 51 does not contact the edge portion 41 of the convex lens 38. The leakproof cover 51 does not overlap the flange 42 in the front view of the vehicle.

Reference is made to Fig. 2. The leakproof cover 51 has a first shielding portion 52. The first shielding portion 52 is located below the convex lens 38. The first shielding portion 52 is located higher than the under bracket 11. The first shielding portion 52 is, in the front view of the vehicle, located leftward of the right front suspension 8 and rightward of the left front suspension 9.

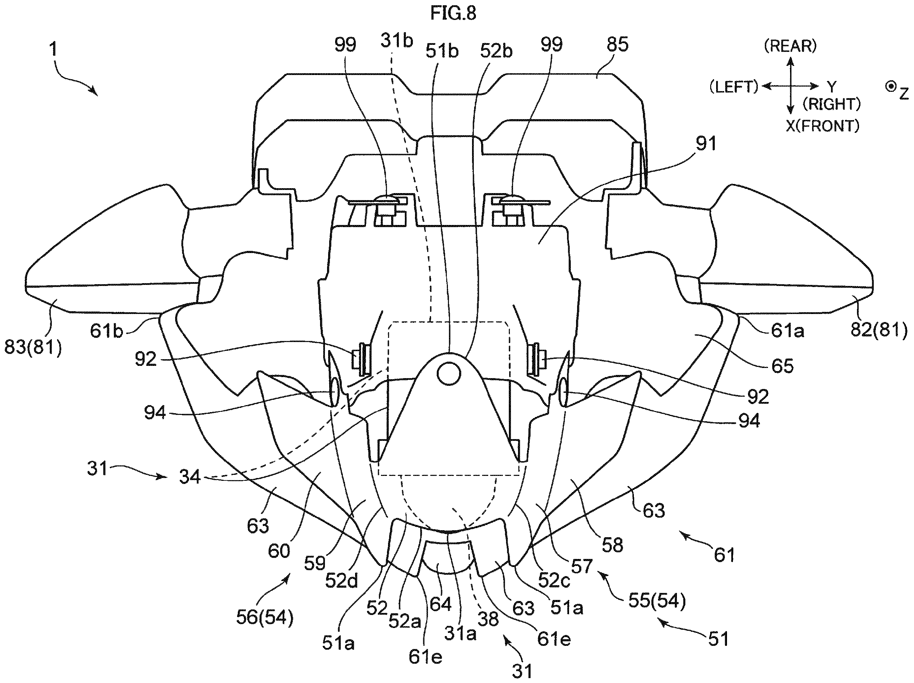

Fig. 7 is a plan view of the headlight 31 and leakproof cover 51. Fig. 8 is a bottom view of the headlight 31, leakproof cover 51, and top cover 61. The first shielding portion 52 overlaps part of the convex lens 38 in the plan view of the vehicle. Specifically, the first shielding portion 52 overlaps most portions of the convex lens 38 in the plan view of the vehicle. The front end 31a of the headlight 31 is located more forward than the first shielding portion 52. The first shielding portion 52 does not overlap parts of the convex lens 38 located near the front end 31a of the headlight 31 in the plan view of the vehicle.

The first shielding portion 52 has a substantially horizontal plate shape. The first shielding portion 52 has a front edge 52a and a rear edge 52b in the plan view of the vehicle. The front edge 52a is located in front of most portions of the convex lens 38 in the plan view of the vehicle. The front edge 52a is curved to bulge forward in the plan view of the vehicle. The front edge 52a is curved more gently than the convex lens 38 in the plan view of the vehicle. The rear edge 52b is located behind the convex lens 38 in the plan view of the vehicle. The first shielding portion 52 extends substantially in the longitudinal direction X between the front edge 52a and rear edge 52b in the plan view of the vehicle.

The first shielding portion 52 has a right edge 52c and a left edge 52d in the plan view of the vehicle. The right edge 52c is located rightward of the convex lens 38 in the plan view of the vehicle. The left edge 52d is located leftward of the convex lens 38 in the plan view of the vehicle. The first shielding portion 52 extends substantially in the transverse direction Y between the right edge 52c and left edge 52d in the plan view of the vehicle.

The first shielding portion 52 overlaps part of the housing 34 in the plan view of the vehicle. The first shielding portion 52 is located in front of the rear end 31b of the headlight 31 in the plan view of the vehicle.

Reference is made to Fig. 6. The first shielding portion 52 has an upper surface 53. The upper surface 53 is substantially level in the front view of the vehicle. More strictly, the upper surface 53 is slightly curved to bulge downward in the front view of the vehicle. The upper surface 53 is located higher than the under bracket 11.

Reference is made to Fig. 2. The leakproof cover 51 has a second shielding portion 54. The second shielding portion 54 is located rightward of the convex lens 38 and leftward of the convex lens 38. The second shielding portion 54 is located higher than the under bracket 11.

The second shielding portion 54 has a right shielding portion 55 and a left shielding portion 56. The right shielding portion 55 is located rightward of the convex lens 38. The left shielding portion 56 is located leftward of the convex lens 38. Part of the right shielding portion 55 (e.g. an upper end 55b to be described hereinafter) overlaps the right front suspension 8 in the front view of the vehicle. Part of the left shielding portion 56 (e.g. an upper end 56b to be described hereinafter) overlaps the left front suspension 9 in the front view of the vehicle. The right shielding portion 55 has the same construction and shape as the left shielding portion 56 except for being symmetric.

Reference is made to Fig. 7. The right shielding portion 55 is connected to the first shielding portion 52. The right shielding portion 55 is connected to the right edge 52c. The left shielding portion 56 is connected to the first shielding portion 52. The left shielding portion 56 is connected to the left edge 52d.

Reference is made to Fig. 6. The right shielding portion 55 extends upward and rightward from the first shielding portion 52 in the front view of the vehicle. In the front view of the vehicle, a spacing in the transverse direction Y between the right shielding portion 55 and convex lens 38 enlarges upward. The left shielding portion 56 extends upward and leftward from the first shielding portion 52 in the front view of the vehicle. In the front view of the vehicle, a spacing in the transverse direction Y between the left shielding portion 56 and convex lens 38 enlarges upward.

The right shielding portion 55 has a lower end 55a and an upper end 55b. The lower end 55a is located lower than the convex lens 38. The upper end 55b is located more rightward and higher than the lower end 55a. The upper end 55b is located higher than the convex lens 38. Similarly, the left shielding portion 56 has a lower end 56a and an upper end 56b. The lower end 56a is located lower than the convex lens 38. The upper end 56b is located more leftward and higher than the lower end 56a. The upper end 56b is located higher than the convex lens 38.

The right shielding portion 55 includes a lower part 57 and an upper part 58. The lower part 57 is connected to the first shielding portion 52. The upper part 58 is connected to the lower part 57. The upper part 58 is located higher than the lower part 57. The lower part 57 and upper part 58 extend upward and rightward in the front view of the vehicle, respectively. The upper part 58 has an inclination in the front view of the vehicle which is closer to the horizontal than that of the lower part 57. Similarly, the left shielding portion 56 includes a lower part 59 and an upper part 60. The lower part 59 is connected to the first shielding portion 52. The upper part 60 is connected to the lower part 59. The upper part 60 is located higher than the lower part 59. The lower part 59 and upper part 60 extend upward and leftward in the front view of the vehicle, respectively. The upper part 60 has an inclination in the front view of the vehicle which is closer to the horizontal than that of the lower part 59.

Reference is made to Fig. 3. The left shielding portion 56 overlaps the convex lens 38 in the side view of the vehicle. The lower part 59 and upper part 60 overlap the convex lens 38 in the side view of the vehicle, respectively. Similarly, the right shielding portion 55 overlaps the convex lens 38 in the side view of the vehicle. The lower part 57 and upper part 58 overlap the convex lens 38 in the side view of the vehicle, respectively.

The upper end 56b is located more rearward than the convex lens 38. Similarly, the upper end 55b is located more rearward than the convex lens 38.

Reference is made to Figs. 7 and 8. The lower parts 57 and 59 project more forward than the front edge 52a in the plan view of the vehicle, respectively. The lower parts 57 and 59 include the front ends 51a of the leakproof cover 51, respectively. The front end 51a included in the lower part 57 is located more rightward than the convex lens 38. The front end 51a included in the lower part 59 is located more leftward than the convex lens 38. The front end 51a included in the lower part 57 may be in the same position as the lower end 55a, or may be in a position adjacent the lower end 55a. The same may be said of the front end 51a included in the lower part 59 and the lower end 56a of the left shielding portion 56.

The upper part 58 extends rightward and rearward from the lower part 57 in the plan view of the vehicle. The upper part 60 extends leftward and rearward from the lower part 59 in the plan view of the vehicle.

### 4. Top cover

Reference is made to Figs. 2 and 3. The top cover 61 has a light blocking property. That is, the top cover 61 does not transmit light. The top cover 61 is formed of a non-transparent material. The top cover 61 is formed of a colored synthetic resin, for example.

The top cover 61 has a first cover 63, a second cover 64, and a third cover 65. The first cover 63, second cover 64, and third cover 65 are connected to one another. The first cover 63, second cover 64, and third cover 65 are separable from one another. The first cover 63 extends in the transverse direction Y in the front view of the vehicle. The second cover 64 is located above the first cover 63. The second cover 64 extends upward and rearward from the first cover 63. The third cover 65 is located behind the first cover 63 and behind the second cover 64. The third cover 65 covers a rear part of the first cover 63 and a rear part of the second cover 64 from behind.

Reference is made to Fig. 2. The top cover 61 overlaps the head tube 4 in the front view of the vehicle. The top cover 61 overlaps the right front suspension 8 and left front suspension 9 in the front view of the vehicle. The top cover 61 has a right end 61a and a left end 61b. The top cover 61 extends substantially in the transverse direction Y between the right end 61a and left end 61b in the front view of the vehicle. The right end 61a is located more rightward than the right front suspension 8. The left end 61b is located more leftward than the left front suspension 9.

The top cover 61 is located above the under bracket 11 in the front view of the vehicle. The under bracket 11 is located more leftward than the right end 61a of the top cover 61 and more rightward than the left end 61b of the top cover 61.

Reference is made to Fig. 3. The top cover 61 is located in front of the head tube 4 in the side view of the vehicle. The top cover 61 has an upper end 61c and a lower end 61d. The top cover 61 extends in the up-down direction Z between the upper end 61c and lower end 61d. The upper end 61c is located higher than the head tube 4. The lower end 61d is located lower than the rear end 4a of the head tube 4, and higher than the lower end 4b thereof.

The top cover 61 is located in front of the left front suspension 9 in the side view of the vehicle. The upper end 61c of the top cover 61 is located higher than the left front suspension 9. The lower end 61d of the top cover 61 is located lower than the upper end 9c of the left front suspension 9.

The top cover 61 is located above under bracket 11 in the side view of the vehicle. The top cover 61 includes a portion located more forward than the under bracket 11. The top cover 61 has a front end 61e and a rear end 61f. The top cover 61 extends in the longitudinal direction X between the front end 61e and rear end 61f. The under bracket 11 is located more rearward than the front end 61e of the top cover 61. The under bracket 11 is located more forward than the rear end 61f of the top cover 61.

The top cover 61 is located in front of the upper bracket 13 in the side view of the vehicle. The upper bracket 13 is located lower than the upper end 61c of the top cover 61 and higher than the lower end 61d of the top cover 61.

Thus, the top cover 61 does not overlap the head tube 4, right front suspension 8, left front suspension 9, under bracket 11, or upper bracket 13 in the side view of the vehicle.

The top cover 61 is located above the headlight 31 in the side view of the vehicle. The headlight 31 is located more rearward than the front end 61e of the top cover 61. The headlight 31 is located more forward than the rear end 61f of the top cover 61.

The top cover 61 is located above the leakproof cover 51 in the side view of the vehicle. The leakproof cover 51 is located more rearward than the front end 61e of the top cover 61. The leakproof cover 51 is located more forward than the rear end 61f of the top cover 61.

Reference is made to Fig. 1. The top cover 61 is located more rearward than the front end 19a of the front fender 19.

Reference is made to Figs. 1 and 3. The straddled vehicle 1 has a clearance space 62. The clearance space 62 is formed below the top cover 61 and above the headlight 31. The clearance space 62 is limited to a range which overlaps at least either the top cover 61 or the headlight 31 in the plan view of the vehicle. The clearance space 62 is a space which separates the headlight 31 and top cover 61. The clearance space 62 is distinguishable in the side view of the vehicle. That is, at least part of an upper edge of the headlight 31 and at least part of a lower edge of the top cover 61 are visible in the side view of the vehicle.

The clearance space 62 is open forward. The front of the clearance space 62 is not covered. That is, the straddled vehicle 1 has no component covering the front of the clearance space 62.

The clearance space 62 is open rightward and leftward. A right part and a left part of the clearance space 62 are not covered. That is, the straddled vehicle 1 has no component covering the right part of the clearance space 62. The straddled vehicle 1 has no component covering the left part of the clearance space 62.

In a side view of the vehicle, the far side of the straddled vehicle 1 is visible through the clearance space 62. For example, when the straddled vehicle 1 is seen from a position leftward of the straddled vehicle 1, objects other than the straddled vehicle 1 located rightward of the straddled vehicle 1 are visible through the clearance space 62.

Reference is made to Fig. 6. The top cover 61 is located above the headlight 31. The headlight 31 is located more leftward than the right end 61a of the top cover 61 and more rightward than the left end 61b of the top cover 61.

The top cover 61 is shaped to cover the upper part of the headlight 31. The top cover 61 is shaped not to cover the lower part, right part, or left part of the headlight 31. More particularly, the top cover 61 has a shape not covering the lower part, right part, left part, front part, or rear part of the headlight 31.

The top cover 61 is located in a position spaced from the headlight 31. That is, the top cover 61 is located in a position out of contact with the headlight 31.

The top cover 61 is located above the leakproof cover 51. The leakproof cover 51 is located more leftward than the right end 61a of the top cover 61 and more rightward than the left end 61b of the top cover 61.

The top cover 61 is located in a position spaced from leakproof cover 51. That is, the top cover 61 is located in a position out of contact with the leakproof cover 51.

The top cover 61 does not overlap the convex lens 38 in the front view of the vehicle. The top cover 61 does not surround the circumference of the convex lens 38 in the front view of the vehicle. The top cover 61 does not contact the edge portion 41 of convex lens 38. The top cover 61 does not overlap the flange 42 in the front view of the vehicle.

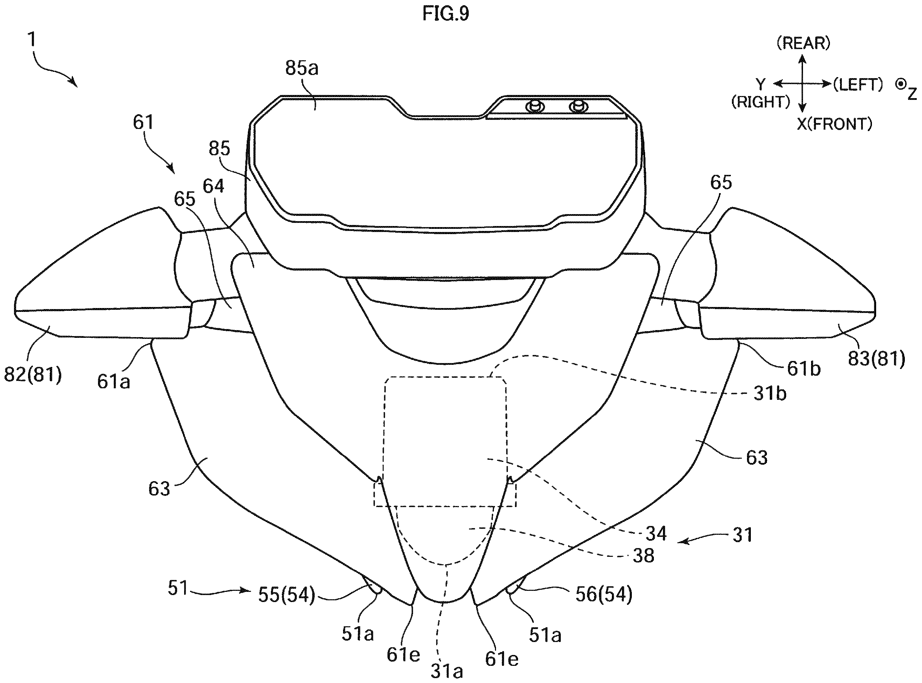

Reference is made to Figs. 8 and 9. Fig. 9 is a plan view of the top cover 61 and headlight 31. The top cover 61 overlaps the convex lens 38 in the plan view of the vehicle. The top cover 61 overlaps the headlight 31 in the plan view of the vehicle.

The top cover 61 overlaps part of the leakproof cover 51 in the plan view of the vehicle. The top cover 61 overlaps the entire first shielding portion 52 in the plan view of the vehicle. The top cover 61 overlaps most of the second shielding portion 54 in the plan view of the vehicle. The top cover 61 does not overlap the front ends 51a of the leakproof cover 51 in the plan view of the vehicle. The top cover 61 does not overlap the portion located adjacent the front ends 51a of the leakproof cover 51 in the plan view of the vehicle.

### 5. Position lights and flashers

Reference is made to Figs. 1 and 2.

The straddled vehicle 1 has position lights 71. The position lights 71 emit light ahead of the straddled vehicle 1. The position lights 71 have a less quantity of light than the headlight 31.

The position lights 71 are supported by the top cover 61. Specifically, the position lights 71 are supported by the first cover 63.

The position lights 71 include a right position light 72 and a left position light 75. The left position light 75 is located leftward of the right position light 72. The left position light 75 is located in a position spaced from the right position light 72. The right position light 72 has the same construction and shape as the left position light 75 except for being symmetric. The left position light 75 overlaps the right position light 72 in the side view of the vehicle.

The right position light 72 has an elongated shape extending substantially horizontally (specifically, substantially in the transverse direction Y) in the front view of the vehicle. The left position light 75 has an elongated shape extending substantially horizontally (specifically, substantially in the transverse direction Y) in the front view of the vehicle.

The right position light 72 is located more rightward than the head tube 4. The left position light 75 is located more leftward than the head tube 4. The position lights 71 are located more leftward than the right edge 8a of the right front suspension 8 in the front view of the vehicle. The position lights 71 are located more leftward than the left edge 9a of the left front suspension 9 in the front view of the vehicle. The position lights 71 are located above the under bracket 11 in the front view of the vehicle. The position lights 71 are located more leftward than the right end 11a of the under bracket 11 and more rightward than the left end 11b of the under bracket 11.

Reference is made to Fig. 3. The position lights 71 have an elongated shape extending substantially horizontally (specifically, substantially in the longitudinal direction X) in the side view of the vehicle.

The position lights 71 are located in front of the head tube 4 in the side view of the vehicle. The position lights 71 are located lower than the rear end 4a of the head tube 4 and higher than the lower end 4b thereof. The position lights 71 are located in front of the left front suspension 9 in the side view of the vehicle. The position lights 71 are located lower than the upper end 9c of the left front suspension 9. The position lights 71 are located more forward and higher than the under bracket 11.

The position lights 71 are located above the headlight 31 in the side view of the vehicle. The position lights 71 are located more rearward than the front end 31a of the headlight 31 and more forward than the rear end 31b of the headlight 31. The position lights 71 are located in positions spaced from the headlight 31. That is, the position lights 71 are located in positions out of contact with the headlight 31. The position lights 71 are located above the convex lens 38 in the side view of the vehicle.

The position lights 71 are located above the leakproof cover 51 in the side view of the vehicle. The position lights 71 are located more rearward than the front ends 51a of the leakproof cover 51 and more forward than the rear end 51b of the leakproof cover 51.

The position lights 71 are located lower than the upper end 61c of the top cover 61 and higher than the lower and 61d of the top cover 61. The position lights 71 are located more rearward than the front end 61e of the top cover 61 and more forward than the rear end 61f of the top cover 61.

Reference is made to Fig. 6. The right position light 72 is located higher than the convex lens 38. The right position light 72 is located more rightward than the convex lens 38. The left position light 75 is located higher than the convex lens 38. The left position light 75 is located more leftward than the convex lens 38.

The top cover 61 surrounds the circumference of the right position light 72 in the front view of the vehicle. The top cover 61 contacts edges of the right position light 72. The top cover 61 surrounds the circumference of the left position light 75 in the front view of the vehicle. The top cover 61 contacts edges of the left position light 75.

The above will be described specifically. The top cover 61 has a right opening (not shown) and a left opening (not shown). The right position light 72 has a clear cover 73. The left position light 75 has a clear cover 76. The clear covers 73 and 76 have light transmissive property, respectively. The clear cover 73 is located in the right opening. The clear cover 76 is located in the left opening. The top cover 61 contacts edges of the clear cover 73 and edges of the clear cover 76.

The straddled vehicle 1 has flashers 81. The flashers 81 emit blinking light. The flashers 81 emit blinking light mainly in order to notify third parties of course changes of the straddled vehicle 1, for example. The flashers 81 are supported by the top cover 61. Specifically, the flashers 81 are supported by the third cover 65.

The flashers 81 include a right flasher 82 and a left flasher 83. The left flasher 83 is located leftward of the right flasher 82. The left flasher 83 is located in a position spaced from the right flasher 82. The right flasher 82 has the same construction and shape as the left flasher 83 except for being symmetric.

Reference is made to Fig. 2. The right flasher 82 is located more rightward than the right front suspension 8. The left flasher 83 is located more leftward than the left front suspension 9.

Reference is made to Fig. 3. The flashers 81 are located above the left front suspension 9 in the side view of the vehicle. The flashers 81 are located higher and more rearward than the position lights 71. The flashers 81 are located lower than the upper end 61c of the top cover 61. The flashers 81 are located more forward than the rear end 61f of the top cover 61.

Reference is made to Fig. 6. The flashers 81 are located higher than the position lights 71. The right flasher 82 is located more rightward than the right position light 72. The left flasher 83 is located more leftward than the left position light 75. The right flasher 82 includes a portion located more rightward than the right end 61a of the top cover 61. The left flasher 83 includes a portion located more leftward than the left end 61b of the top cover 61.

The flashers 81 are located in positions spaced from the position lights 71 and headlight 31. That is, the flashers 81 are located in positions out of contact with the position lights 71 and headlight 31.

The top cover 61 does not surround the circumferences of the flashers 81 in the front view of the vehicle. The top cover 61 does not contact edges of the flashers 81.

### 6. Meter unit

Reference is made to Figs. 1 and 2. The straddled vehicle 1 has a meter unit 85. The meter unit 85 presents the rider with information about the straddled vehicle 1, for example. The information about the straddled vehicle 1 is traveling speeds of the straddled vehicle 1, for example. The meter unit 85 has a display portion 85a for displaying the information about the straddled vehicle 1 (see Fig. 9). The meter unit 85 is supported by the top cover 61. Specifically, the meter unit 85 is supported by the third cover 65.

Reference is made to Fig. 2. The meter unit 85 is located more leftward than the right edge 8a of the right front suspension 8 in the front view of the vehicle. The meter unit 85 is located more rightward than the left edge 9a of the left front suspension 9 in the front view of the vehicle.

Reference is made to Fig. 3. The meter unit 85 is located higher and more forward than the rear end 4a of the head tube 4. The meter unit 85 is located above the left front suspension 9 in the side view of the vehicle. The meter unit 85 is located above the upper bracket 13 in the side view of the vehicle. The meter unit 85 is located more forward than the handlebar 16.

The meter unit 85 is located more rearward and higher than the headlight 31. The meter unit 85 is located more rearward and higher than the convex lens 38. The meter unit 85 is located more rearward and higher than the leakproof cover 51. The meter unit 85 is located higher than the lower end 61d of the top cover 61. The meter unit 85 includes a portion located higher than the upper end 61c of the top cover 61, and a portion located lower than the upper end 61c of the top cover 61. The meter unit 85 is located more rearward than the front end 61e of the top cover 61. The meter unit 85 includes a portion located more forward than the rear end 61f of the top cover 61, and a portion located more rearward than the rear end 61f of the top cover 61. The meter unit 85 is located more rearward and higher than the position lights 71. The meter unit 85 is located above the flashers 81 in the side view of the vehicle.

Reference is made to Fig. 6. Part of the meter unit 85 is located above the top cover 61 in the front view of the vehicle. The meter unit 85 is located more leftward than the right end 61a of the top cover 61 and more rightward than the left end 61b of the top cover 61.

### 7. Electric wiring

Reference is made to Fig. 3. The straddled vehicle 1 has a harness 86. The harness 86 is a bundle of a plurality of electric wires. The harness 86 is an example of electric wiring according to the present teaching.

Part of the harness 86 is located more forward than the rear end 4a of the head tube 4, more rearward than the headlight 31, and higher than the headlight 31. An arrangement of the harness 86 will be described in detail hereinafter.

The harness 86 includes a first portion 86a, a second portion 86b, and a third portion 86c. The first to third portions 86a-86c are located more forward than the rear end 4a of the head tube 4, more rearward than the headlight 31, and higher than the headlight 31, respectively.

The first portion 86a is located more rearward than the left front suspension 9. The first portion 86a overlaps the head tube 4 in the side view of the vehicle. The first portion 86a extends upward.

The second portion 86b extends forward from the first portion 86a in the side view of the vehicle. The second portion 86b overlaps the left front suspension 9 in the side view of the vehicle. More particularly, the second portion 86b is located leftward of the right front suspension 8, and rightward of the left front suspension 9. Further, the second portion 86b is located higher than the under bracket 11, and lower rather than the upper bracket 13.

The third portion 86c extends forward from the second portion 86b in the side view of the vehicle. The third portion 86c reaches the top cover 61 (specifically, the third cover 65). The third portion 86c is located more forward than the left front suspension 9.

Thus, the harness 86 extends from the first portion 86a via the second portion 86b to the third portion 86c. The harness 86 extends forward and upward from the first portion 86a to the third portion 86c in the side view of the vehicle.

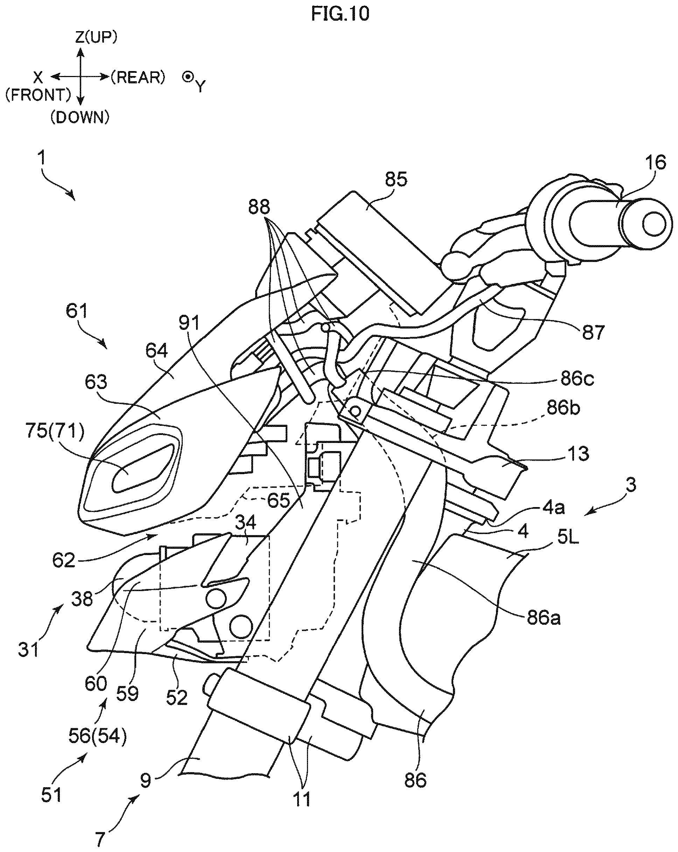

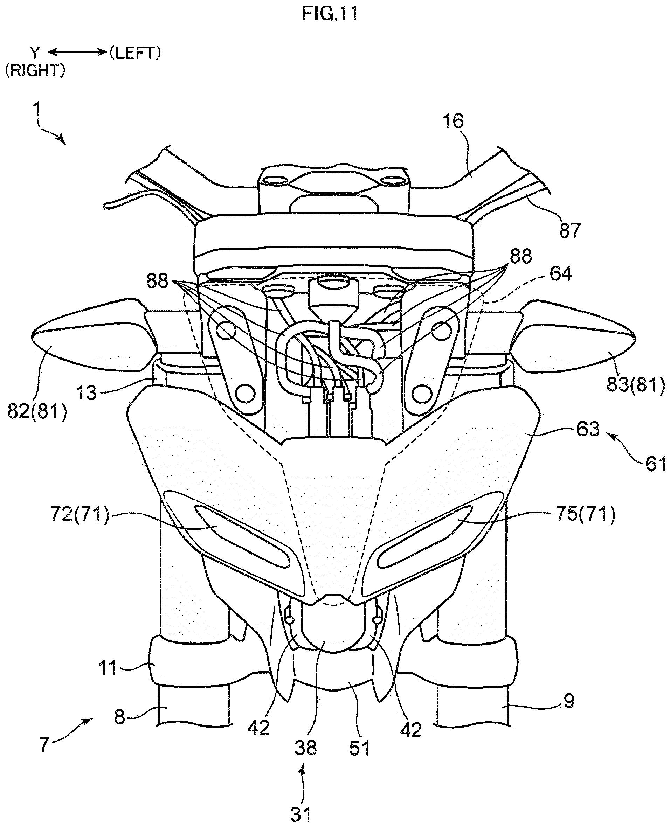

Fig. 10 is a left side view of a portion of the straddled vehicle. Fig. 10 omits illustration of the third cover 65. Specifically, Fig. 10 shows the third cover 65 in a broken line. Fig. 11 is a perspective view of a portion of the straddled vehicle 1 seen from an upper forward position of the straddled vehicle 1. Fig. 11 omits illustration of the second cover 64. Specifically, Fig. 11 shows the second cover 64 in a broken line.

The straddled vehicle 1 has electric wiring 87. The electric wiring 87 extends from the handlebar 16 to the top cover 61. A large part of the electric wiring 87 is located more forward than the rear end 4a of the head tube 4, more rearward than the headlight 31, and higher than the headlight 31.

The straddled vehicle 1 has a plurality of electric wires 88. Each electric wire 88 branches from the harness 86. Each electric wire 88 is thinner than the harness 86. Specifically, each electric wire 88 has an outside diameter smaller than the harness 86. The electric wires 88 are arranged in an interior of the top cover 61. The interior of the top cover 61 is demarcated by the first cover 63, second cover 64, and third cover 65. The electric wires 88 are arranged more forward than the rear end 4a of the head tube 4, more rearward than the headlight 31, and higher than the headlight 31.

### 8. Support structure for headlight 31, leakproof cover 51, and top cover 61

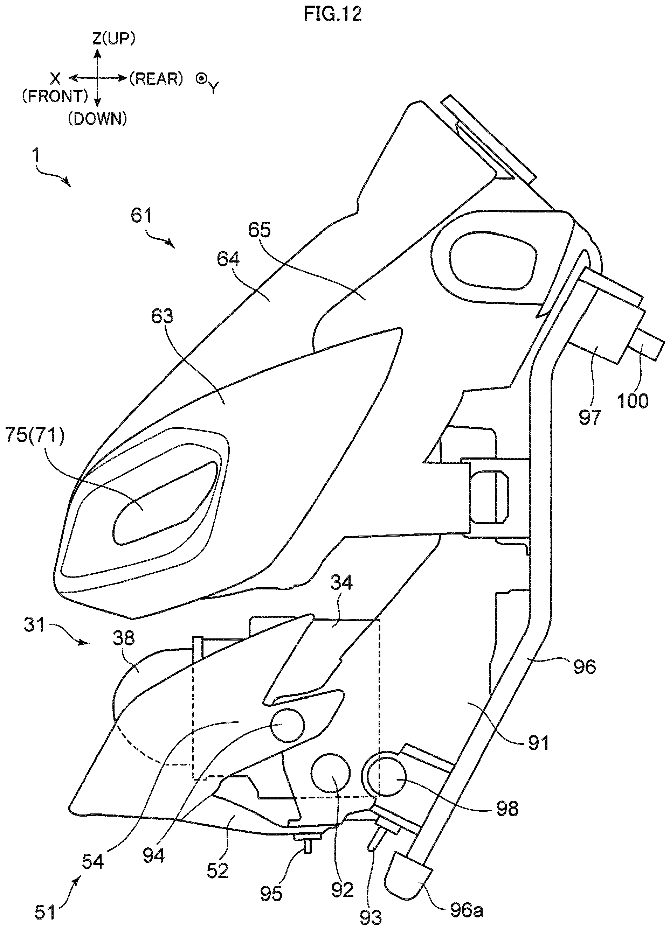

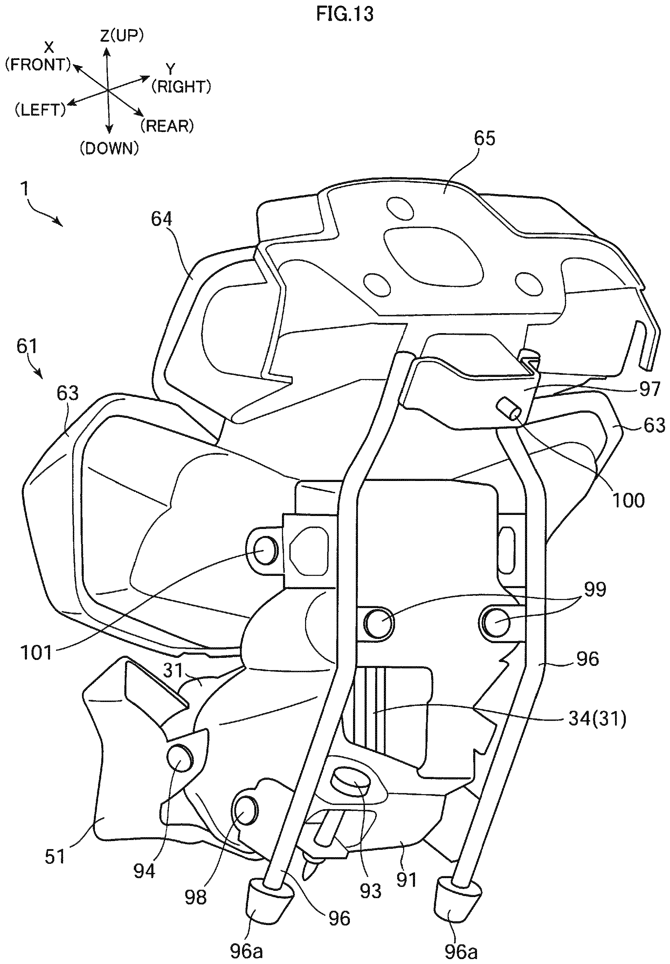

Fig. 12 is a left side view of a portion of the straddled vehicle 1. Fig. 13 is a perspective view of the portion of the straddled vehicle 1 seen from a rear left position of the straddled vehicle 1. The headlight 31 is supported by the steering device 7. The leakproof cover 51 and top cover 61 are also supported by the steering device 7.

The straddled vehicle 1 has a support cover 91. The support cover 91 is located behind the headlight 31 and leakproof cover 51.

The straddled vehicle 1 has a mounting shaft 92 and an adjusting screw 93. The mounting shaft 92 and adjusting screw 93 are supported by the support cover 91. The mounting shaft 92 extends substantially in the transverse direction Y. The mounting shaft 92 supports the headlight 31 (specifically the sides of the housing 34). The headlight 31 is rotatable about the mounting shaft 92 relative to the support cover 91. The adjusting screw 93 is joined to the headlight 31 (specifically the rear of the housing 34). With rotation of the adjusting screw 93, the rear of the housing 34 moves axially of the adjusting screw 93 relative to the support cover 91. With rotation of the adjusting screw 93, therefore, the headlight 31 rotates about the mounting shaft 92 relative to the support cover 91, thereby moving the direction of the light (i.e. the optical axis) of the headlight 31 up and down. In this way the headlight 31 is rotatably supported by the support cover 91.

The straddled vehicle 1 has fastening members 94 and 95. The fastening member 94 joins the leakproof cover 51 (specifically the second shielding portion 54) and support cover 91. The fastening member 95 joins the leakproof cover 51 (specifically the first shielding portion 52) and support cover 91. Consequently, the leakproof cover 51 is fixed to the support cover 91.

The headlight 31 and leakproof cover 51 are not connected directly. The straddled vehicle 1 has no fastening member that directly joins the headlight 31 and leakproof cover 51.

The straddled vehicle 1 has a pair of stays 96, a bar 97, and fastening members 98 and 99. Each stay 96 is a crooked rod-like object. The bar 97 connects the pair of stays 96. The bar 97 has a first end connected to an upper end of one of the stays 96, and a second end connected to an upper end of the other stay 96. Consequently, the pair of stays 96 and the bar 97 are fixed to each other. The fastening members 98 join lateral part of the support cover 91 and the stays 96. The fastening members 99 join rear parts of the support cover 91 and the stays 96. Consequently, the support cover 91 is fixed to the stays 96.

The straddled vehicle 1 has fastening members 100 and 101. The fastening member 100 joins the top cover 61 (specifically the third cover 65) and bar 97. The fastening member 101 joins the top cover 61 (specifically the third cover 65) and stays 96. Consequently, the top cover 61 is fixed to the stays 96 and bar 97.

Fig. 14 is a perspective view of a portion of the straddled vehicle 1 seen from a rear left position of the straddled vehicle 1. The fastening member 100 is further joined to the upper bracket 13. That is, the fastening member 100 joins the top cover 61, bar 97, and upper bracket 13 all together. Consequently, the top cover 61 and bar 97 are fixed to the upper bracket 13.

Each stay 96 has a lower end 96a. Each lower end 96a is joined to the under bracket 11. Specifically, each lower end 96a is inserted in a recess (not shown) formed in the upper surface 12 of the under bracket 11. Each lower end 96a is held by the under bracket 11. Consequently, each stay 96 is fixed to the under bracket 11.

The fastening members 94-95 and 98-101 are bolts, nuts, screws, and the like, for example. Fig. 8 and other figures omit illustration as appropriate of the adjusting screw 93 or fastening members 94-95 and 98-101.

As described above, the steering device 7 supports the headlight 31, leakproof cover 51, and top cover 61. Since the top cover 61 supports the position lights 71, flashers 81, and meter unit 85, the steering device 7 also supports the position lights 71, flashers 81, and meter unit 85.

### 9. Advantageous effects

According to this embodiment, the leakproof cover 51 has the first shielding portion 52. The first shielding portion 52 is located below the convex lens 38. That is, the first shielding portion 52 overlaps part of the convex lens 38 in plan view. The first shielding portion 52 can therefore block light emitted downward from the headlight 31. This can reduce the quantity of light from the headlight 31 striking upon the under bracket 11. As a result, the quantity of light from the headlight 31 which reflects upon the under bracket 11 to scatter to the vicinity of the rider can be reduced. Thus, even if the headlight 31 is installed in an open space, the leakage of the light from the headlight 31 can be reduced conveniently. The rider can therefore control the straddled vehicle 1 comfortably. That is, according to the straddled vehicle 1, the headlight 31 can be installed in an open space, while reducing leakage of the light of the headlight 31.

Since the first shielding portion 52 is located below the convex lens 38, the quantity of light from the headlight 31 striking upon the right front suspension 8 and left front suspension 9 can also be reduced. As a result, the quantity of light from the headlight 31 reflecting upon the right front suspension 8 and left front suspension 9 to scatter to the vicinity of the rider can also be reduced.

The first shielding portion 52 overlaps most portions of the convex lens 38 in the plan view of the vehicle. The quantity of light from the headlight 31 striking upon the under bracket 11 can therefore be inhibited effectively.

At least part of the first shielding portion 52 is located higher than the under bracket 11. The quantity of light from the headlight 31 striking upon the under bracket 11 can therefore be reduced effectively.

The upper surface 53 of the first shielding portion 52 is located higher than the under bracket 11. The quantity of light from the headlight 31 striking upon the under bracket 11 can therefore be reduced effectively.

The whole of leakproof cover 51 is located higher than the under bracket 11. Consequently, the leakproof cover 51 can effectively reduce the quantity of light from the headlight 31 striking upon the under bracket 11.

The front edge 52a of the first shielding portion 52 is located in front of most parts of the convex lens 38 in the plan view of the vehicle. The first shielding portion 52 can therefore conveniently block the light emitted downward from the headlight 31.

The rear edge 52b of the first shielding portion 52 is located behind the convex lens 38 in the plan view of the vehicle. The first shielding portion 52 can therefore conveniently block the light emitted rearward and downward from the headlight 31.

The right edge 52c of the first shielding portion 52 is located rightward of the convex lens 38 in the plan view of the vehicle. The first shielding portion 52 can therefore conveniently block the light emitted rightward and downward from the headlight 31.

The left edge 52d of the first shielding portion 52 is located leftward of the convex lens 38 in the plan view of the vehicle. The first shielding portion 52 can therefore conveniently block the light emitted leftward and downward from the headlight 31.

The leakproof cover 51 has the second shielding portion 54. The second shielding portion 54 is located rightward and leftward of the convex lens 38. That is, the second shielding portion 54 overlaps the convex lens 38 in the side view of the vehicle. The second shielding portion 54 can therefore block the light emitted rightward and leftward from the headlight 31. Consequently, the quantity of light from the headlight 31 striking upon the under bracket 11 can be further reduced.

Since the second shielding portion 54 is located rightward of the convex lens 38, the quantity of light from the headlight 31 striking upon the right front suspension 8 can also be reduced. Since the second shielding portion 54 is located leftward of the convex lens 38, the quantity of light from the headlight 31 striking upon the left front suspension 9 can also be reduced.

The lower end 55a of the right shielding portion 55 is located lower than the convex lens 38. The quantity of light from the headlight 31 striking upon the under bracket 11 can therefore be inhibited effectively. Similarly, the lower end 56a of the left shielding portion 56 is located lower than the convex lens 38. The quantity of light from the headlight 31 striking upon the under bracket 11 can therefore be inhibited effectively.

The leakproof cover 51 is shaped not to cover the upper part of the headlight 31. Consequently, the headlight 51 can be installed in a space opened to the exterior of the straddled vehicle 1.

The leakproof cover 51 is located in a position spaced from the headlight 31. Consequently, the headlight 31 can be installed in a further opened space.

The leakproof cover 51 does not surround the circumference of the convex lens 38 in the front view of the vehicle. Consequently, the headlight 31 can be installed in a further opened space.

The leakproof cover 51 does not contact the edge portion 41 of the convex lens 38. Consequently, the headlight 31 can be installed in a still further opened space.

The upper surface 12 of the under bracket 11 slopes rearward and downward. The upper surface 12 can therefore easily reflect the light from the headlight 31 toward the vicinity of the rider. Even in such a case, the leakproof cover 51 can reduce the quantity of light from the headlight 31 striking upon the under bracket 11. Thus, with the upper surface 12 sloping rearward and downward, the leakproof cover 51 exhibits all the higher utility.

At least part of the under bracket 11 is exposed to the exterior of the straddled vehicle 1 in the front view and side view of the vehicle. In this case, the light from the headlight 31 easily strikes upon the under bracket 11. Even in such a case, the leakproof cover 51 can reduce the quantity of light from the headlight 31 striking upon the under bracket 11. Thus, with at least part of the under bracket 11 exposed to the exterior of the straddled vehicle 1 in the front view and side view of the vehicle, the leakproof cover 51 exhibits all the higher utility.

At least part of the upper right portion of the right front suspension 8 and at least part of the upper left portion of the left front suspension 9 are exposed to the exterior of the straddled vehicle 1 in the front view and side view of the vehicle. In such a case, the light from the headlight 31 easily strikes upon the right front suspension 8 and left front suspension 9. Even in such a case, the leakproof cover 51 can reduce the quantity of light from the headlight 31 striking upon the right front suspension 8 and left front suspension 9. Thus, with at least part of the upper right portion and at least part of the upper left portion exposed to the exterior of the straddled vehicle 1 in the front view and side view of the vehicle, the leakproof cover 51 exhibits all the higher utility.

The top cover 61 is located above the headlight 31. That is, the top cover 61 overlaps the headlight 31 in the plan view of the vehicle. The top cover 61 can therefore block the light emitted upward from the headlight 31. The quantity of light from the headlight 31 scattering to the vicinity of the rider can therefore be further reduced.

The top cover 61 overlaps the whole of headlight 31 in the plan view of the vehicle. The top cover 61 can therefore effectively block the light emitted upward from the headlight 31.

The top cover 61 overlaps the leakproof cover 51 in the plan view of the vehicle. The top cover 61 can therefore effectively block the light reflected by the leakproof cover 51.

The top cover 61 is shaped not to cover the lower part, right part, or left part of the headlight 31. Consequently, the headlight 31 can be installed in a further opened space.

The top cover 61 is located in a position spaced from the headlight 31. Consequently, the headlight 31 can be installed in a further opened space.

The top cover 61 does not surround the circumference of the convex lens 38 in the front view of the vehicle. Consequently, the headlight 31 can be installed in a further opened space.

The top cover 61 does not contact the edge portion 41 of the convex lens 38. Consequently, the headlight 31 can be installed in a further opened space.

The straddled vehicle 1 has the clearance space 62 formed below the top cover 61 and above the headlight 31. Consequently, the headlight 31 can be installed in an open space.

The clearance space 62 is open forward, rightward, and leftward. Consequently, the headlight 31 can be installed in a further opened space.

The top cover 61 does not overlap the right front suspension 8, left front suspension 9, or under bracket 11 in the side view of the vehicle. As is clear from this, the size of the top cover 61 is relatively small. The headlight 31 can therefore be installed in a further opened space.

The position lights 71 are supported by the top cover 61. The position lights 71 can therefore be installed conveniently.

The position lights 71 are located in positions spaced from the headlight 31. Consequently, the headlight 31 can be located in a further opened space. Further, when it is dark around the straddled vehicle 1, a dark part can be formed between the headlight 31 turned on and the position lights 71 turned on. This can make the headlight 31 and position lights 71 individually conspicuous.

The position lights 71 include the right position light 72 and left position light 75. This allows a right end of the right position light 72 and a left end of the left position light 75 easily to be away from each other in the transverse direction Y. Consequently, the position lights 71 can easily be located over a large range in the transverse direction Y, thereby to improve visibility of the position lights 71.

The right position light 72 is located higher and more rightward than the convex lens 38. Consequently, the right position light 72 can conveniently be located in the position spaced from the headlight 31. The left position light 75 is located higher and more leftward than the convex lens 38. Consequently, the left position light 75 can conveniently be located in the position spaced from the headlight 31.

The right position light 72 has an elongated shape extending substantially horizontally in the front view of the vehicle. This can improve visibility of the right position light 72. Similarly, the left position light 75 has an elongated shape extending substantially horizontally in the front view of the vehicle. This can improve visibility of the left position light 75.

Part of the meter unit 85 is located above the top cover 61 in the front view of the vehicle. With this arrangement, the top cover 61 can further reduce the quantity of light from the headlight 31 scattering to the vicinity of the meter unit 85.

Part of the harness 86 is located more forward than the rear end 4a of the head tube 4, more rearward than the headlight 31, and higher than the headlight 31. Consequently, the harness 86 can further reduce the quantity of light from the headlight 31 scattering to the vicinity of the rider.

The harness 86 has the first portion 86a, second portion 86b, and third portion 86c. The first to third portions 86a-86c are located more forward than the rear end 4a of the head tube 4, more rearward than the headlight 31, and higher than the headlight 31, respectively. The harness 86 extends forward and upward from the first portion 86a to the third portion 86c in the side view of the vehicle. Consequently, the harness 86 can effectively reduce the quantity of light of from the headlight 31 scattering to the vicinity of the rider.

The harness 86 is relatively thick. That is, the harness 86 has a relatively large outside diameter. This can effectively reduce the quantity of light of from the headlight 31 scattering to the vicinity of the rider.

A large part of the electric wiring 87 is located more forward than the rear end 4a of the head tube 4, more rearward than the headlight 31, and higher than the headlight 31. Consequently, the electric wiring 87 can effectively reduce the quantity of light of from the headlight 31 scattering to the vicinity of the rider.

The electric wires 88 are located more forward than the rear end 4a of the head tube 4, more rearward than the headlight 31, and higher than the headlight 31. Consequently, the electric wires 88 can effectively reduce the quantity of light from the headlight 31 scattering to the vicinity of the rider.

The present teaching is not limited to the foregoing embodiment, but may be modified as follows:
(1) In the foregoing embodiment, part of the leakproof cover 51 is located below the headlight 31 and above the under bracket 11 in the front view of the vehicle. The present teaching is not limited to this. The whole of leakproof cover 51 may be located below the headlight 31 and above the under bracket 11 in the front view of the vehicle.
(2) In the foregoing embodiment, the whole of leakproof cover 51 is located above the under bracket 11 in the front view of the vehicle. The present teaching is not limited to this. For example, the leakproof cover 51 may include a portion located at the same height as the under bracket 11. For example, the leakproof cover 51 may overlap the under bracket 11 in the front view of the vehicle. The leakproof cover 51 may include a portion located lower than the under bracket 11. In sum, at least part of the leakproof cover 51 may be located above the under bracket 11 in the front view of the vehicle.
(3) In the foregoing embodiment, the leakproof cover 51 is shaped not to cover the upper part of the headlight 31 in the front view of the vehicle. The leakproof cover 51 may be shaped not to cover the upper part or a right part of the headlight 31 in the front view of the vehicle. The leakproof cover 51 may be shaped not to cover the upper part or left part of the headlight 31 in the front view of the vehicle. The leakproof cover 51 may be shaped not to cover the upper part, right part, or left part of the headlight 31 in the front view of the vehicle.
(4) In the foregoing embodiment, the leakproof cover 51 is shaped to cover the lower part, right part, and left part of the headlight 31 in the front view of the vehicle. The present teaching is not limited to this. The leakproof cover 51 may be shaped to cover the lower part and right part of the headlight 31 in the front view of the vehicle. The leakproof cover 51 may be shaped to cover the lower part and left part of the headlight 31 in the front view of the vehicle. The leakproof cover 51 may be shaped to cover the lower part of the headlight 31 in the front view of the vehicle.
(5) In the foregoing embodiment, the leakproof cover 51 overlaps the left front suspension 9 in the side view of the vehicle. The present teaching is not limited to this. The leakproof cover 51 does not need to overlap the left front suspension 9 in the side view of the vehicle. The whole of leakproof covers 51 may be located more forward than the left front suspension 9. This can make the size of the leakproof cover 51 still smaller. The headlight 31 can therefore be installed in a further opened space.
(6) In the foregoing embodiment, the whole of first shielding portion 52 is located higher than the under bracket 11. However, the present teaching is not limited to this. For example, the first shielding portion 52 may include a portion located at the same height as the under bracket 11. For example, the first shielding portion 52 may overlap the under bracket 11 in the front view of the vehicle. The first shielding portion 52 may include a portion located lower than the under bracket 11. In sum, at least part of the first shielding portion 52 may be located higher than the under bracket 11.
(7) In the foregoing embodiment, the first shielding portion 52 overlaps part of the convex lens 38 in the plan view of the vehicle. However, the present teaching is not limited to this. The first shielding portion 52 may overlap the whole of convex lens 38 in the plan view of the vehicle.
(8) In the foregoing embodiment, the first shielding portion 52 overlaps part of the headlight 31 in the plan view of the vehicle. However, the present teaching is not limited to this. The first shielding portion 52 may overlap the whole of headlight 31 in the plan view of the vehicle.
(9) In the foregoing embodiment, the front edge 52a of the first shielding portion 52 is located in front of most portions of the convex lens 38 in the plan view of the vehicle. However, the present teaching is not limited to this. The front edge 52a may be located in front of the whole of convex lens 38 in the plan view of the vehicle.
(10) In the foregoing embodiment, the whole of second shielding portion 54 is located higher than the under bracket 11. However, the present teaching is not limited to this. For example, the second shielding portion 54 may include a portion located at the same height as the under bracket 11. For example, the second shielding portion 54 may overlap the under bracket 11 in the front view of the vehicle. The second shielding portion 54 may include a portion located lower than the under bracket 11. In sum, at least part of the second shielding portion 54 may be located higher than the under bracket 11.
(11) In the foregoing embodiment, the second shielding portion 54 is located rightward of the convex lens 38 and leftward of the convex lens 38. However, the present teaching is not limited to this. For example, the second shielding portion 54 may be located either rightward of the convex lens 38 or leftward of the convex lens 38. This allows the headlight 31 to be located in a further opened space.
(12) In the foregoing embodiment, the second shielding portion 54 has the right shielding portion 55 and left shielding portion 56. However, the present teaching is not limited to this. Any one of the right shielding portion 55 and left shielding portions 56 may be omitted. This allows the headlight 31 to be located in a further opened space.
(13) In the foregoing embodiment, the leakproof cover 51 has the second shielding portion 54. However, the present teaching is not limited to this. The second shielding portion 54 may be omitted. This allows the headlight 31 to be located in a further opened space.
(14) In the foregoing embodiment, the second shielding portion 54 overlaps part of the convex lens 38 in the side view of the vehicle. However, the present teaching is not limited to this. The second shielding portion 54 may overlap the whole of convex lens 38 in the side view of the vehicle.
(15) In the foregoing embodiment, the top cover 61 overlaps the whole of headlight 31 in the plan view of the vehicle. However, the present teaching is not limited to this. The top cover 61 may overlap only part of the headlight 31 in the plan view of the vehicle. In sum, the top cover 61 may overlap at least part of the headlight 31 in the plan view of the vehicle.
(16) In the foregoing embodiment, the top cover 61 overlaps the whole of convex lens 38 in the plan view of the vehicle. However, the present teaching is not limited to this. The top cover 61 may overlap only part of the convex lens 38 in the plan view of the vehicle. In sum, the top cover 61 may overlap at least part of the convex lens 38 in the plan view of the vehicle.
(17) In the foregoing embodiment, the front face 39 of the convex lens 38 bulges in a substantially hemispherical shape in the side view and plan view of the vehicle. However, the present teaching is not limited to this. As long as the front face 39 of the convex lens 38 is curved to protrude forward, the shape of the front face 39 may be changed as appropriate.
(18) In the foregoing embodiment, the rear face 40 of the convex lens 38 is substantially flat. However, the present teaching is not limited to this. The shape of the rear face 40 may be changed as appropriate. For example, the rear face 40 may be curved to protrude forward. For example, the rear face 40 may be curved to protrude rearward.
(19) In the foregoing embodiment, part of the meter unit 85 is located above the top cover 61 in the front view of the vehicle. However, the present teaching is not limited to this. For example, the whole of meter unit 85 may be located above the top cover 61 in the front view of the vehicle. In short, at least part of the meter unit 85 may be located above the top cover 61 in the front view of the vehicle.
(20) In the foregoing embodiment, part of the harness 86 is located more forward than the rear end 4a of the head tube 4, more rearward than the headlight 31, and higher than the headlight 31. However, the present teaching is not limited to this. The whole of harness 86 may be located more forward than the rear end 4a of the head tube 4, more rearward than the headlight 31, and higher than the headlight 31. The same may be said of the electric wiring 87.
(21) In the foregoing embodiment, all of the electric wires 88 are located more forward than the rear end 4a of the head tube 4, more rearward than the headlight 31, and higher than the headlight 31. However, the present teaching is not limited to this. Part of the electric wires 88 may be located more forward than the rear end 4a of the head tube 4, more rearward than the headlight 31, and higher than the headlight 31.
(22) In the foregoing embodiment, the steering device 7 has the upper bracket 13. However, the present teaching is not limited to this. The upper bracket 13 may be omitted. In this modified embodiment, the right front suspension 8 and left front suspension 9 are supported only by the under bracket 11. The shape of the left front suspension 9 may therefore be changed as appropriate. For example, the length of the left front suspension 9 may be reduced as appropriate. For example, the upper end 9c of the left front suspension 9 may be located at substantially the same height as the under bracket 11. The left front suspension 9 may be located lower than the head tube 4. The left front suspension 9 may be located lower than the headlight 31. The left front suspension 9 may be located lower than the leakproof cover 51. The left front suspension 9 may be located lower than the top cover 61. Similarly, the shape of the right front suspension 8 may also be changed as appropriate.
(23) In the foregoing embodiment, the straddled vehicle 1 has been illustrated as an example of street type vehicles. The present teaching is not limited to this. The straddled vehicle 1 may be changed to vehicles of other types, such as the sport type or a vehicle for irregular grounds (ALL-TERRAIN VEHICLE).
(24) In the foregoing embodiment, the number of front wheel 18 is one. The present teaching is not limited to this. The number of front wheel 18 may be changed to two.
(25) In the foregoing embodiment, the engine (internal combustion engine) 21 has been illustrated as power source. The present teaching is not limited to this. For example, the straddled vehicle 1 may further include an electric motor as power source. For example, the straddled vehicle 1 may have an electric motor, instead of the engine 21, as power source.

## Claims

1. A straddled vehicle (1) comprising:
a head tube (4);
a steering device (7) supported by the head tube (4), the steering device (7) is rotatable relative to the head tube (4), the steering device (7) includes a handlebar (16) disposed on an upper part of the steering device (7), a front axle (17) is supported by a lower part of the steering device (7), a front wheel (18) is supported by the front axle (17), the head tube (4) has a rear end (4a) and a lower end (4b), the lower end (4b) is located more forward and lower than the rear end (4a);
a headlight (31) supported by the steering device (7), the headlight (31) is located in front of the head tube (4) in the side view of the vehicle and overlaps the head tube (4) in the front view of the vehicle;
the steering device (7) including:
a right front suspension (8) located more rightward than the head tube (4);
a left front suspension (9) located more leftward than the head tube (4); and
a bracket (11) connecting the right front suspension (8) and the left front suspension (9);
the headlight (31) including:
a light source (32);
a housing (34) storing the light source (32); and
a convex lens (38) attached to the housing (34), the convex lens (38) is exposed to the exterior of the straddled vehicle (1), wherein the headlight (31) does not have a member that covers an area in front of the convex lens (38) and the straddled vehicle (1) does not also have a member that covers the area in front of the convex lens (38);
wherein the headlight (31) is located more leftward than the right front suspension (8) and more rightward than the left front suspension (9);
the bracket (11) has a right end (11a) and a left end (11b), the headlight (31) is located more leftward than the right end (11a) of the bracket (11) and more rightward than the left end (11b) of the bracket (11), and the headlight (31) is located above the bracket (11) in a front view of the vehicle;
the headlight (31) is located above the front wheel (18) in the front view of the vehicle;
the front wheel (18) has a right end (18a) and a left end (18b), and the headlight (31) is located more leftward than the right end (18a) of the front wheel (18) and more rightward than the left end (18b) of the front wheel (18);
the headlight (31) is located lower than the rear end (4a) of the head tube (4), and the headlight (31) is located higher than the lower end (4b) of the head tube (4);
the straddled vehicle (1) further comprises a leakproof cover (51) having at least part thereof located below the headlight (31) and above the bracket (11) in the front view of the vehicle;
the leakproof cover (51) including a first shielding portion (52) located below the convex lens (38) and configured to block light emitted downward from the headlight (31).

2. The straddled vehicle (1) according to claim 1, wherein at least part of the first shielding portion (52) is located higher than the bracket (11); and
the first shielding portion (52) overlaps at least part of the convex lens (38) in a plan view of the vehicle.

3. The straddled vehicle (1) according to claim 1 or 2, wherein the leakproof cover (51) is shaped not to cover an upper part of the headlight (31).

4. The straddled vehicle (1) according to any one of claims 1 to 3, wherein the leakproof cover (51) is located in a position spaced from the headlight (31).

5. The straddled vehicle (1) according to any one of claims 1 to 4, wherein the leakproof cover (51) as a whole is located higher than the bracket (11).

6. The straddled vehicle (1) according to any one of claims 1 to 5, wherein the bracket (11) has an upper surface (12) sloping rearward and downward.

7. The straddled vehicle (1) according to any one of claims 1 to 6, further comprising a top cover (61) located above the headlight (31).

8. The straddled vehicle (1) according to claim 7, wherein the top cover (61) is located in a position spaced from the headlight (31).

9. The straddled vehicle (1) according to claim 7 or 8, further comprising a clearance space (62) formed below the top cover (61) and above the headlight (31);
wherein the clearance space (62) is open forward, rightward and leftward.

10. The straddled vehicle (1) according to any one of claims 7 to 9, wherein the top cover (61) does not overlap the right front suspension (8), the left front suspension (9), or the bracket (11) in a side view of the vehicle.

11. The straddled vehicle (1) according to any one of claims 7 to 10, further comprising position lights (71) supported by the top cover (61);
wherein the position lights (71) are located in positions spaced from the headlight (31).

12. The straddled vehicle (1) according to claim 11, wherein the position lights (71) include:
a right position light (72); and
a left position light (75) located leftward of the right position light (72);
the right position light (72) and the left position light (75) being located higher than the convex lens (38);
the right position light (72) being located more rightward than the convex lens (38);
the left position light (75) being located more leftward than the convex lens (38).

13. The straddled vehicle (1) according to claim 12, wherein the right position light (72) has an elongated shape extending substantially horizontally in the front view of the vehicle; and
the left position light (75) has an elongated shape extending substantially horizontally in the front view of the vehicle.

14. The straddled vehicle (1) according to any one of claims 7 to 13, further comprising a meter unit (85) having at least part thereof located above the top cover (61) in the front view of the vehicle.

15. The straddled vehicle (1) according to any one of claims 1 to 14 further comprising electric wiring (86, 87, 88) having at least part thereof located more forward than a rear end (4a) of the head tube (4), more rearward than the headlight (31), and higher than the headlight (31).

## Patentansprüche

1. Ein Spreiz-Sitz-Fahrzeug (1), das umfasst:
ein Kopf-Rohr (4);
eine Lenk-Vorrichtung (7), die durch das Kopf-Rohr (4) gelagert ist, die Lenk-Vorrichtung (7) ist relativ zu dem Kopf-Rohr (4) drehbar, die Lenk-Vorrichtung (7) beinhaltet eine Lenkstange (16), die an einem oberen Teil der Lenk-Vorrichtung (7) angeordnet ist, eine Vorder-Achse (17) ist durch einen unteren Teil der Lenk-Vorrichtung (7) gelagert, ein Vorder-Rad (18) ist durch die Vorder-Achse (17) gelagert, das Kopf-Rohr (4) hat ein hinteres Ende (4a) und ein unteres Ende (4b), das untere Ende (4b) ist weiter vorne und tiefer als das hintere Ende (4a) angeordnet;
einen Scheinwerfer (31), der durch die Lenk-Vorrichtung (7) gelagert ist, der Scheinwerfer (31) ist vor dem Kopf-Rohr (4) angeordnet in der Seiten-Ansicht des Fahrzeugs ist und überlappt das Kopf-Rohr (4) in der Vorder-Ansicht des Fahrzeugs;
die Lenk-Vorrichtung (7) beinhaltet:
eine rechte Vorder-Rad-Aufhängung (8), die weiter rechts als das Kopf-Rohr (4) angeordnet ist;
eine linke Vorder-Rad-Aufhängung (9), die weiter links als das Kopf-Rohr (4) angeordnet ist; und
eine Klammer (11), welche die rechte Vorder-Rad-Aufhängung (8) und die linke Vorder-Rad-Aufhängung (9) verbindet;
den Scheinwerfer (31) beinhaltet:
eine Lichtquelle (32);
ein Gehäuse (34), in dem die Lichtquelle (32) untergebracht ist; und
eine konvexe Linse (38), die an dem Gehäuse (34) angebracht ist, die konvexe Linse (38) liegt zur Außenseite des Spreiz-Sitz-Fahrzeugs (1) frei, wobei der Scheinwerfer (31) kein Element aufweist, das einen Bereich vor der konvexen Linse (38) abdeckt, und das Spreiz-Sitz-Fahrzeug (1) auch kein Element aufweist, das den Bereich vor der konvexen Linse (38) abdeckt;
wobei der Scheinwerfer (31) weiter links als die rechte Vorder-Rad-Aufhängung (8) und weiter rechts als die linke Vorder-Rad-Aufhängung (9) angeordnet ist;
die Klammer (11) hat ein rechtes Ende (11a) und ein linkes Ende (11b), der Scheinwerfer (31) ist weiter links als das rechte Ende (11a) der Klammer (11) und weiter rechts als das linke Ende (11b) der Klammer (11) angeordnet, und der Scheinwerfer (31) ist oberhalb der Klammer (11) angeordnet in einer Vorder-Ansicht des Fahrzeugs;
der Scheinwerfer (31) ist oberhalb des Vorder-Rads (18) angeordnet in der Vorder-Ansicht des Fahrzeugs;
das Vorder-Rad (18) hat ein rechtes Ende (18a) und ein linkes Ende (18b), und der Scheinwerfer (31) ist weiter links als das rechte Ende (18a) des Vorder-Rades (18) und weiter rechts als das linke Ende (18b) des Vorder-Rades (18) angeordnet;
der Scheinwerfer (31) ist niedriger als das hintere Ende (4a) des Kopf-Rohrs (4) angeordnet, und der Scheinwerfer (31) höher als das untere Ende (4b) des Kopf-Rohrs (4) angeordnet;
das Spreiz-Sitz-Fahrzeug (1) umfasst weiterhin eine leckdichte Abdeckung (51), von der zumindest ein Teil unterhalb des Scheinwerfers (31) und oberhalb der Klammer (11) angeordnet ist in der Vorder-Ansicht des Fahrzeugs;
die leckdichte Abdeckung (51) beinhaltet einen ersten Abschirm-Abschnitt (52), der unterhalb der konvexen Linse (38) angeordnet ist, und konfiguriert ist, um Licht zu blockieren das von dem Scheinwerfer (31) nach unten abgestrahlt ist.

2. Das Spreiz-Sitz-Fahrzeug (1) gemäß Anspruch 1, wobei zumindest ein Teil des ersten Abschirm-Abschnitts (52) höher als die Klammer (11) angeordnet ist; und
der erste Abschirm-Abschnitt (52) zumindest einen Teil der konvexen Linse (38) überlappt in der Draufsicht auf das Fahrzeug.

3. Das Spreiz-Sitz-Fahrzeug (1) gemäß Anspruch 1 oder 2, wobei die leckdichte Abdeckung (51) geformt ist, um einen oberen Teil des Scheinwerfers (31) nicht abzudecken.

4. Das Spreiz-Sitz-Fahrzeug (1) gemäß irgendeinem der Ansprüche 1 bis 3, wobei die leckdichte Abdeckung (51) in einer vom Scheinwerfer (31) beabstandeten Position angeordnet ist.

5. Das Spreiz-Sitz-Fahrzeug (1) gemäß irgendeinem der Ansprüche 1 bis 4, wobei die leckdichte Abdeckung (51) insgesamt höher als die Klammer (11) angeordnet ist.

6. Das Spreiz-Sitz-Fahrzeug (1) gemäß irgendeinem der Ansprüche 1 bis 5, wobei die Klammer (11) eine obere Fläche (12) hat, die nach hinten und unten geneigt ist.

7. Das Spreiz-Sitz-Fahrzeug (1) gemäß irgendeinem der Ansprüche 1 bis 6, das weiterhin umfasst einer oberen Abdeckung (61), die oberhalb des Scheinwerfers (31) angeordnet ist.

8. Das Spreiz-Sitz-Fahrzeug (1) gemäß Anspruch 7, wobei die obere Abdeckung (61) in einer vom Scheinwerfer (31) beabstandeten Position angeordnet ist.

9. Das Spreiz-Sitz-Fahrzeug (1) gemäß Anspruch 7 oder 8, das weiterhin umfasst einen Freiraum (62), der unterhalb der oberen Abdeckung (61) und oberhalb des Scheinwerfers (31) ausgebildet ist;
wobei der Freiraum (62) nach vorne, nach rechts und nach links offen ist.

10. Das Spreiz-Sitz-Fahrzeug (1) gemäß irgendeinem der Ansprüche 7 bis 9, wobei die obere Abdeckung (61) die rechte Vorder-Rad-Aufhängung (8), die linke Vorder-Rad-Aufhängung (9) oder die Klammer (11) nicht überlappt in einer Seiten-Ansicht des Fahrzeugs.

11. Das Spreiz-Sitz-Fahrzeug (1) gemäß irgendeinem der Ansprüche 7 bis 10, das weiterhin umfasst Positionsleuchten (71), die durch die oberen Abdeckung (61) gelagert sind;
wobei die Positionsleuchten (71) in Positionen angeordnet sind, die vom Scheinwerfer (31) beabstandet sind.

12. Das Das Spreiz-Sitz-Fahrzeug (1) gemäß Anspruch 11, wobei die Positionsleuchten (71) beinhalten:
eine rechtes Positionsleuchte (72); und
eine linke Positionsleuchte (75), die links von der rechten Positionsleuchte (72) angeordnet ist;
die rechte Positionsleuchte (72) und die linke Positionsleuchte (75) sind höher als die konvexe Linse (38) angeordnet;
die rechte Positionsleuchte (72) ist weiter rechts angeordnet als die konvexe Linse (38);
die linke Positionsleuchte (75) ist weiter links angeordnet als die konvexe Linse (38).

13. Das Spreiz-Sitz-Fahrzeug (1) gemäß Anspruch 12, wobei die rechte Positionsleuchte (72) eine längliche Form hat, die sich im Wesentlichen horizontal erstreckt in der Vorder-Ansicht des Fahrzeugs; und
die linke Positionsleuchte (75) eine längliche Form hat, die sich im Wesentlichen horizontal erstreckt in der Vorder-Ansicht des Fahrzeugs.

14. Das Spreiz-Sitz-Fahrzeug (1) gemäß irgendeinem der Ansprüche 7 bis 13, das weiterhin umfasst eine Mess-Einheit (85), die zumindest ein Teil derselben hat, der oberhalb der oberen Abdeckung (61) angeordnet ist in der Vorder-Ansicht des Fahrzeugs.

15. Das Spreiz-Sitz-Fahrzeug (1) gemäß irgendeinem der Ansprüche 1 bis 14 das weiterhin umfasst eine elektrische Verkabelung (86, 87, 88), die zumindest ein Teil derselben hat, der weiter vorne als ein hinteres Ende (4a) des Kopf-Rohrs (4), weiter hinten als der Scheinwerfer (31) und höher als der Scheinwerfer (31) angeordnet ist.

## Revendications

1. Véhicule à selle (1) comprenant :
un tube de fourche (4),
un dispositif de direction (7) supporté par le tube de fourche (4), le dispositif de direction (7) incluant un guidon (16) disposé sur la partie supérieure du dispositif de direction (7), l'essieu avant (17) est supporté par une partie inférieure du dispositif de direction (7), la roue avant (18) est supportée par l'essieu avant (17), le tube de fourche (4) comporte une extrémité arrière (4a) et une extrémité inférieure (4b), l'extrémité inférieure (4b est située plus en avant et plus bas que l'extrémité arrière (4a),
un bloc optique (31) supporté par le dispositif de direction (7), le bloc optique (31) étant situé en avant du tube de fourche (4) selon la vue latérale du véhicule et chevauchant le tube de fourche (4) selon la vue avant du véhicule,
le dispositif de direction (7) incluant :
une suspension avant droite (8) située plus sur le côté droit que le tube de fourche (4),
une suspension avant gauche (9) située plus sur le côté gauche que le tube de fourche (4), et
un support (11) reliant la suspension avant droite (8) et la suspension avant gauche (9),
le bloc optique (31) incluant :
une source de lumière (32),
une enveloppe (34) renfermant la source de lumière (32), et
une lentille convexe (38) fixée à l'enveloppe (34), la lentille convexe (38) étant exposée à l'environnement extérieur du véhicule à selle (1), le bloc optique (31) ne possédant pas d'élément qui recouvre une surface en avant de la lentille convexe (38) et le véhicule à selle (1) ne possédant pas non plus d'élément qui recouvre la surface en avant de la lentille convexe (38),
dans lequel le bloc optique (31) est situé plus sur le côté gauche que la suspension avant droite (8) et plus sur le côté droit que la suspension avant gauche (9),
le support (11) comporte une extrémité droite (11a) et une extrémité gauche (11b), le bloc optique (31) est situé plus sur le côté gauche de l'extrémité droite (11a) du support (11) et plus sur le côté droit que l'extrémité gauche du support (11), et le bloc optique (31) est situé au-dessus du support (11) selon une vue avant du véhicule,
le bloc optique (31) est situé au-dessus de la roue avant (18) selon la vue avant du véhicule,
la roue avant (18) comporte une extrémité droite (18a) et une extrémité gauche (18b), et le bloc optique (31) est situé plus sur le côté gauche que l'extrémité droite (18a) de la roue avant (18) et plus sur le côté droit que l'extrémité gauche (18b) de la roue avant (18),
le bloc optique (31) est situé plus bas que l'extrémité arrière (4a) du tube de fourche (4) et le bloc optique (31) est situé plus haut que l'extrémité inférieure (4b) du tube de fourche (4),
le véhicule à selle (1) comprend en outre un capot étanche dont au moins une partie est située en dessous du bloc optique (31) et au-dessus du support (11) selon la vue avant du véhicule,
le capot étanche (51) incluant un premier organe de protection (52) situé en dessous de la lentille convexe (38) et configuré pour bloquer la lumière émise vers le bas depuis le bloc optique (31).

2. Véhicule à selle (1) selon la revendication 1, dans lequel au moins une partie du premier organe de protection (52) est située plus haut que le support (11), et
le premier organe de protection (52) chevauche au moins une partie de la lentille convexe (38) selon une vue en plan du véhicule.

3. Véhicule à selle (1) selon la revendication 1 ou la revendication 2, dans lequel le capot étanche (51) est façonné pour ne pas recouvrir la partie supérieure du bloc optique (31).

4. Véhicule à selle (1) selon l'une quelconque des revendications 1 à 3, dans lequel le capot étanche (51) est situé à l'écart du bloc optique (31).

5. Véhicule à selle (1) selon l'une quelconque des revendications 1 à 4, dans lequel le capot étanche (51) est situé dans son ensemble plus haut que le support (11).

6. Véhicule à selle (1) selon l'une quelconque des revendications 1 à 5, dans lequel le support (11) possède une surface supérieure (12) en pente vers l'arrière et vers le bas.

7. Véhicule à selle (1) selon l'une quelconque des revendications 1 à 6, comprenant en outre un capot supérieur (61) situé au-dessus du bloc optique (31).

8. Véhicule à selle (1) selon la revendication 7, dans lequel le capot supérieur (61) est situé à l'écart du bloc optique (31).

9. Véhicule à selle (1) selon la revendication 7 ou la revendication 8, comprenant en outre un espace de jeu (62) formé en dessous du capot supérieur (61) et au-dessus du bloc optique (31),
dans lequel l'espace de jeu (62) est ouvert vers l'avant, vers la droite et vers la gauche.

10. Véhicule à selle (1) selon l'une quelconque des revendications 7 à 9, dans lequel le capot supérieur (61) ne chevauche pas la suspension avant droite (8), la suspension avant gauche (9) ou le support (11) selon une vue latérale du véhicule.

11. Véhicule à selle (1) selon l'une quelconque des revendications 7 à 10, comprenant en outre des feux de position (71) supportés par le capot supérieur (61),
dans lequel les feux de position (71) sont disposés à l'écart du bloc optique (31).

12. Véhicule à selle (1) selon la revendication 11, dans lequel les feux de position (71) incluent :
un feu de position droit (72), et
un feu de position gauche (75) situé à gauche du feu de position droit (72),
le feu de position droit (72) et le feu de position gauche (75) étant situés plus haut que la lentille convexe (38),
le feu de position droit (72) étant situé plus sur le côté droit que la lentille convexe (38),
le feu de position gauche (75) étant situé plus sur le côté gauche que la lentille convexe (38).

13. Véhicule à selle (1) selon la revendication 12, dans lequel le feu de position droit (72) présente une forme allongée s'étendant pratiquement horizontalement selon la vue avant du véhicule, et
le feu de position gauche (15) présente une forme allongée s'étendant pratiquement horizontalement selon la vue avant du véhicule.

14. Véhicule à selle (1) selon l'une quelconque des revendications 7 à 13, comprenant en outre une unité de compteur (85) dont au moins une partie est située au-dessus du capot supérieur (61) selon la vue avant du véhicule.

15. Véhicule à selle (1) selon l'une quelconque des revendications 1 à 14, comprenant en outre des câblages électriques (86, 87, 88) dont au moins une partie est située plus en avant que l'extrémité arrière (4a) du tube de fourche (4), plus en arrière que le bloc optique (31) et plus haut que le bloc optique (31).
